(19) 

Europäisches Patentamt

European Patent Office

Office européen des brevets

(11) **EP 4 787 146 A1**

(12) **EUROPEAN PATENT APPLICATION**

(43) Date of publication:
**05.08.2026 Bulletin 2026/32**

(51) International Patent Classification (IPC):
**G06F 7/483** (2006.01)

(21) Application number: **25154663.6**

(52) Cooperative Patent Classification (CPC):
**G06F 7/4833**

(22) Date of filing: **29.01.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ecole Polytechnique Fédérale de Lausanne (EPFL)**
**EPFL-TTO**
**1015 Lausanne (CH)**

(72) Inventors:
• **SHOARAN, Mahsa**
  **1025 ST-SULPICE (CH)**
• **ALEX, Daney**
  **1010 LAUSANNE (CH)**

(74) Representative: **Gsmart**
**Route de Florissant 81**
**1206 Genève (CH)**

(54) **A PROGRAMMABLE COMBINATORIAL LOGIC CELL, A METHOD FOR CONFIGURING SAID CELL FOR USE AS A LOG-DOMAIN ARITHMETIC UNIT AND A NEUROSTIMULATION SYSTEM COMPRISING SAID ARITHMETIC UNIT**

(57)    The present document discloses an energy-efficient, hardware-efficient phase-locked deep brain stimulation system configured to receive neural oscillatory signals from the brain of a subject and to provide different types of phase-locked neural stimulation to in subject's brain in response to certain cross-regional phase-based and amplitude-based neural biomarkers as extracted from the received neural oscillatory signals, for treating a range of network-based neural disorders, including movement disorders, depression, anxiety, OCD and the like. The system comprises a programmable hardware functional cell which may be configured to perform logarithmic arithmetic functions which are particularly efficient in terms of circuit real estate occupation and power consumption when the equations for extracting certain electrophysiological features of the neural oscillatory signals are transformed to provide appropriate logarithmic number system approximations (LNS).

Figure 3

**Description**

**TECHNICAL DOMAIN**

The concepts described herein relate generally to the field of electronic digital signal processing, especially for use in the domain of control systems. More particularly, embodiments of the present invention may find use in neurostimulation technologies where neural oscillatory signals are captured and analysed in order to be able to generate neural stimulation signals, depending on certain metrics extracted from the captured signals, which can be used to stimulate certain regions of the brain for treating various neurological and/or neuropsychiatric disorders in a subject.

**BACKGROUND**

United States patent application publication no. US2024115863A1 discloses systems and methods for measuring and controlling synchrony between two or more regions, or within a single region, of a subject's brain. Provision is made for receiving a plurality of channels of electrically oscillating neural signals and to bandpass filter the signals and convert the filtered signals into their real and imaginary components. Based on the real and imaginary components of a filtered signal, the quadrant of the oscillating signal on the complex plane can be determined, and from there the phase of the signal is extracted using a linear arctangent approximation algorithm (LAA). The linear arctangent approximation (LAA) algorithm used for estimating the instantaneous phase of neural oscillations may be realised in hardware or in software. Extraction of the phase involves the use of a reciprocal lookup table and a multiplication module. An amplitude extraction circuit is provided for extracting the amplitude of the filtered signals based on their real and imaginary components according to an L-infinity approximation. The document further describes a feature determination circuit for calculating phase locking value (PLV) and/or phase-amplitude coupling (PAC) of the signals. PLV and PAC are two neuroscience-driven biomarkers which are useful in the treatment of certain neurological or neuropsychiatric disorders. The calculation of PLV and/or PAC is based on both the phase and the amplitude of the signals and involves the use of lookup tables for storing sine and cosine values. The thus extracted features are then routed to a stimulation control module, where they can be used to provide phase-locked stimulation at a chosen band and angle to suppress a neurological symptom in a subject.

In view of the above publication, it is still felt that there is a need to further simplify the hardware involved in extracting the features of neural oscillatory signals, thus allowing for still greater efficiency, further reduction in power consumption and yet further optimisation in terms of the hardware footprint occupied by the circuitry required to realise the feature extraction.

In VLSI Design, Volume 2014, Article ID 217495, entitled "Design of Finite Word Length Linear-Phase FIR Filters in the Logarithmic Number System Domain", Alam et al disclose a method for designing a finite word length linear-phase FIR filter. Given that multiplication, division, roots and powers (exponentiation) in the linear domain correspond to addition, subtraction, multiplications (left shifts) and divisions (right shifts), respectively, in the logarithmic domain, the publication discusses the use of the logarithmic number system (LNS) as an attractive alternative for the hardware implementation of finite-length impulse response filters. The authors thus disclose the replacement of filter coefficients by their logarithmic equivalents, easily realisable using shifts, additions and subtractions. However, the publication mainly provides a theoretical view of the subject, and so no circuit layout examples are provided, neither are any circuit schematics for efficient cells provided or otherwise suggested as being useable in an efficient system on chip hardware design.

In IEEE Transactions on Circuits and Systems I: Regular Papers, 70(2), 833-845, Gogineni et al disclose an algorithm and an architecture design of random Fourier features-based kernel adaptive filters. In this publication, the authors propose implementing a cosine function using an approximated Taylor series expansion of the cosine function, where the terms of said expansion are expressed using a logarithmic number system based on Mitchell's scheme for the fixed-point implementation of logarithm and antilogarithm functions in order to be able to realise a more area-efficient and speed-efficient implementation of the cosine function in hardware where blocks involving exponentiation, division and/or multiplication operations are used.

In the magazine, Electronics, 11th Edition 2022, at page 1913, Liu, H. et al disclose A Piecewise Linear Mitchell Algorithm-based Approximate Multiplier. The disclosure acknowledges that computational cost has become a crucial design metric in the field of integrated circuit design for digital signal processing. Recognising that there are many error-tolerant applications, for example in the multimedia field, where approximate computing techniques can be applied to improve computational efficiency and reduce computational costs whilst trading off against acceptable levels of computational errors, the paper proposes a high-performance approximate multiplier circuit structure based on a piecewise linear Michell algorithm. A hardware structure for a logarithmic multiplier is proposed, involving leading ones detection, shifting, and truncation operations.

In IEEE Transactions on Very Large-Scale Integration (VLSI) Systems, Volume 30, Issue No. 7, pages 893-904, published in July 2022, Daney Alex et al disclose hardware architectures for efficient implementation of fractional order correntropy adaptive filters (FoCAFs) in real-time very large-scale integrated circuit (VLSI) implementations. In this publication, the authors disclose a digital hardware circuit for converting a binary number, Q, having an integer portion and a fractional portion, to its binary logarithmic equivalent expression, $\log_2(Q)$, using a leading ones detector, a barrel shifter and an adder. Similarly, the publication also discloses a digital hardware circuit using a barrel shifter for deriving, from digital number, Q, a digital number having the value of $2^Q$, thereby allowing for a binary antilog function to be realised.

**BRIEF SUMMARY**

The present disclosure relates to a novel approach for the hardware-efficient extraction of electrophysiological features of neural oscillatory signals, including their instantaneous phase, their instantaneous amplitude, their spectral power, and various synchrony-related biomarkers of certain neurological and neuropsychiatric disorders, such biomarkers including phase-locking values (PLV) and phase-amplitude coupling measurements (PAC), for example. A system-on-chip (SoC) VLSI circuit is disclosed, which includes standard analogue and digital circuits for amplifying and bandpass filtering multi-channel biological signal inputs (e.g., neural oscillatory signals, including local field potentials (LFP)), as well as circuits for the extraction of the real (Re) and imaginary (Im) components of the bandpass filtered signals. A classifier is also discussed, for providing appropriate neuro stimulation control based on the extracted features of the neural oscillatory signals.

Advantageously, savings in layout area occupied by the filter can be achieved by using a symmetrical FIR filter and by using a new hardware digital logic cell as disclosed herein. Similarly, savings in power consumption exhibited by the resulting filter may also be achieved. Furthermore, a new way of calculating synchrony features such as phase locking value (PLV) and phase-amplitude coupling (PAC) is provided, in which the features can be calculated directly from the instantaneous real and imaginary components of the signals as well as their amplitude, without having to extract their phase, which along with the advantages brought about by the use of the new cell mentioned above, provide for further efficiencies to be achieved, with a reduction in silicon real estate occupied by the hardware being achievable and a reduction in power consumed by the circuit also being achievable. Similar layout and power consumption efficiencies are achievable in a phase extractor disclosed herein due to the new cell proposed, as used in an amplitude extractor and in a spectral power extractor disclosed herein, as well as by using a new approach for phase extraction in which the new cell may also be deployed.

A hardware digital logic cell is disclosed, which can be placed at different positions in a VLSI circuit where it is required, and programmed via hardware or software means. For example, programming may be achieved through hardwiring and/or using a memory such as a ROM. Programming may also be achieved through hardware of software reconfiguration of other functional blocks such as shifters, registers, adders/subtractors and/or multiplexers, to perform different functions as required at different places within a circuit layout, as required. In a preferred embodiment, the hardware digital logic cell can be programmed/reconfigured to function as a logarithmic arithmetic unit providing various different LNS-based functions depending on where it is to be implemented. Thus, a hardware programmable or software programmable digital logic arithmetic unit is disclosed. In a preferred embodiment, the digital logic arithmetic unit may be used as a logarithmic arithmetic unit, where operands are provided in binary logarithmic format, operations such as fixed-point format multiplication/division and exponentiation (powers and or roots) may be performed, with the result being presented in linear format or in binary logarithmic format.

According to a first aspect, there is disclosed herein a programmable combinatorial logic cell for performing a predetermined cell function on a plurality of data input values, the logic cell having a first data input port for receiving a first data input value. The first data input value may be derivable from a first operand. The cell also has one or more further data input ports for receiving one or more further data input values, which may be derivable from one or more further operands. The cell also has an output port for outputting the result of the cell function. The cell may be configured to generate an exponent value by performing a combination of additions and/or subtractions between each from the plurality of data input values using programmable adder/subtractor circuit, said combination depending on said predetermined cell function. Using an antilog converter, the cell may then generate an antilog value, which is substantially equal to the binary antilog of the exponent value. Advantageously, the cell further comprises a first digital control input port for receiving a command of a first type. Within the command of the first type there is encoded at least one correction instruction, which can be a reset instruction or an invert instruction. The cell comprises a decoder to decode the instruction from the encoded command of the first type. Depending on the decoded instruction, the cell is configured to either reset the output port of the cell by forcing a value of zero at the output port when the instruction is a reset instruction. Otherwise, if the instruction is an invert instruction, then the cell is configured to provide the 2's compliment of the antilog value at the output port, which is equivalent to providing the antilog value multiplied by -1. Otherwise, if neither the reset instruction nor the invert instruction are present in the decoded command, the antilog value is presented at the output port. Consequently, the value produced at the output port of the cell satisfies one of the following expressions depending on the correction instruction comprised within the command: output value = 2^(+/-value_port1... +/-value_portp), when the encoded command comprises neither an invert instruction nor a reset instruction, where said additions/subtractions depend on the combination of additions and/or subtractions performed by said programmable adder/subtractor; or output value = (-1) $\times$ (2^(+/- value_port1...

+/-value_portp)), when the encoded command comprises an invert instruction without a reset instruction, where said additions/subtractions depend on the combination of additions and/or subtractions performed by said programmable adder/subtractor; or output value = 0 when the command comprises a reset instruction. In the preceding equations, the number of data input ports is p and value_portn means the data input value at the $n^{th}$ data input port of the cell.

In a preferred embodiment, the first control input port has one control line pair per data input port and the signum of the value of an operand to which the value at the data input port corresponds is encoded onto the respective control line pair, where 00 represents a signum value of 0, 01 represents a signum value of +1 and 11 represents a signum value of -1. The output of the cell satisfies the function output value = (sgn(first operand) $\times$ ... sgn($p^{th}$ operand)) $\times$ 2^(+/-value_port1... +/-value_portp), where sgn(signal) is a signum function having a value of either 0, +1 or -1 depending on whether the signal has a zero value, a positive value or a negative value, respectively.

The cell provides a particularly advantage when it is used as a logarithmic domain arithmetic unit, in which case the cell's data inputs are provided as $log_2$ transformations of operands. Consequently, by the cell performing additions and/or subtractions of the $log_2$ transformations of the operands and with the first control input port of the cell being provided with encoded signums of the operands, the output of the cell has a value of sgn(first operand) $\times$ sgn(second operand) $\times$ sgn($p^{th}$ operand) $\times$ $2^{(+/-\ log_2(|first\ operand|)\ +/-\ log_2(second\ operand)\ +/-...\ log_2(pth\ operand))}$, where the +/- depends on how the adder/subtractor is programmed, which is equivalent to multiplication and/or division of the operands. Since addition and subtraction are more efficiently realised in hardware than multiplication and division, the cell allows for more area efficient and power efficient hardware realisations of mathematical functions involving multiplication and/or division. Consequently, according to an aspect, a method is provided for programming the cell described above for use as a programmable arithmetic unit for performing a predetermined arithmetic function on a plurality of operands, an operand being either a physical operand having a value encoded over a plurality of predetermined digital signals within an electronic circuit within which the cell is placed or a virtual operand having a predetermined value, said arithmetic function being a multiplication and/or division function, the method comprising:

transforming each physical operand value to a value substantially equal to the binary logarithm of the respective physical operand value and providing said transformed physical operand value at a corresponding data input port of the cell;

transforming each virtual operand value to a value substantially equal to the binary logarithm of the predetermined value of the virtual operand and providing said transformed virtual operand at a corresponding data input port of the cell, either by hardwiring a corresponding transformed operand code at the respective data input port of the cell or by reading the transformed operand code at the respective data input port of the cell from a memory;

deriving a signum value for each of the operands, the signum value being 0, +1 or -1 depending on whether the operand has a zero value, a positive value or a negative value, respectively;

encoding the signum values of each of the operands over a respective control line pair from the control input port, said encoding providing a value of 00 for a signum of 0, 01 for a signum of +1 or 11 for a signum value of -1;

programming the cell function by programming the adder/subtractor of the cell such that cell data input values derived from operands which appear as multipliers in the predetermined module function are added at the adder/subtractor and operands which appear as divisors in the predetermined module function are subtracted at the adder/subtractor

The value at the output port of the cell thereby satisfies the expression: output value=(sgn(op1) $\times$ sgn(op2)... $\times$ sgn(opn)) $\times$ 2^((+/-$log_2$|op1|)+/-($log_2$|op2|)... +/-($log_2$|opn|)), where op1, op2, opn are the values of respective operands, and sgn(x) is the signum value of x.

Programmable shift registers and adders/subtractors may be used to perform multiplication or division of the cell data input values, which allows the cell to perform exponentiation functions such as square root, square, cube etc. Consequently, according to an aspect, there is disclosed a method for programming the cell described in the preceding paragraphs for use as a programmable arithmetic unit for performing an arithmetic function on at least a first operand, an operand being either a physical operand having a value encoded over a plurality of predetermined digital signals within an electronic circuit within which the cell is placed or a virtual operand having a predetermined value, said arithmetic function being an exponentiation of the operand value by a power value, the power value having a numerator and a denominator, said method comprising transforming the first operand value to a value substantially equal to the binary logarithm of the first operand value; then:

if the numerator of the power value has a value of $2^x$, where x is either 0 or a positive integer:
performing an x-position left shift on the transformed first operand value, thereby multiplying the transformed first operand value by $2^{\times}$; or
if the numerator of the power value has a value which is greater than $2^x$, where x is either 0 or a positive integer:

performing an x-position left shift on the transformed first operand value; and

adding the transformed first operand value to the thus shifted transformed first operand value a number of times equal to the value of the numerator of the power value minus $2^x$, thereby multiplying the transformed first operand value by the numerator of the power value; or

if the numerator of the power value has a value which is less than $2^x$, where x is either 0 or a positive integer:

performing an x-position left shift on the transformed first operand value; and
subtracting the transformed first operand value from the thus shifted transformed first operand value a number of times equal to $2^x$ minus the numerator of the power value, thereby multiplying the transformed first operand value by the numerator of the power value; and/or

if the denominator of the power value has a value of $2^x$, where x is either 0 or a positive integer:
performing an x-position arithmetic right shift on the transformed first operand value, thereby dividing the transformed first operand value by $2^\times$; and/or

if the denominator of the power value has a value which is greater than $2^x$, where x is either 0 or a positive integer:

performing an x-position arithmetic right shift on the transformed first operand value; and
subtracting the transformed first operand value from the thus shifted transformed first operand value a number of times equal to the value of the denominator of the power value minus $2^x$, thereby dividing the transformed first operand value by the denominator of the power value; and/or

if the denominator of the power value has a value which is less than $2^x$, where x is either 0 or a positive integer:

performing an x-position left shift on the transformed first operand value; and
adding the transformed first operand value to the thus shifted transformed first operand value a number of times equal to $2^x$ minus the value of the denominator of the power value, thereby dividing the transformed first operand value by the denominator of the power value;

using the programmable adder/subtractor of the cell to perform the predetermined cell function on the thus shifted or shifted and added values;
deriving a signum code for said first operand, the signum code being 00, 01 or 11 depending on whether the first operand has a value of zero, a value which is positive or a value which is negative; and
providing said signum code as a first control line pair at the control input port of the cell and providing values of 01 as control line pairs of the control input port for any remaining data input ports of the cell which are unused.

According to further aspects of the invention, the log-domain arithmetic unit may be used to build various log-domain circuit blocks which form part of a log-domain neural connectivity processor, such as: a spectral power extractor for extracting the spectral power of neural oscillatory signals; an amplitude extractor for extracting the instantaneous amplitude of an neural oscillatory signal based on its real and imaginary components; a phase extractor for extracting the instantaneous phase of a neural oscillatory signal; a phase-locking value extractor; a phase-amplitude coupling; and an FIR filter. For example, according to an aspect, a method for approximating the instantaneous phase of an oscillatory signal based on its real and imaginary components (Re, Im) as represented on an Argand plane for the representation of complex numbers is proposed. The method involves approximating the result of the expression arctangent(Im/Re) using digital electronics hardware configured to generate said approximation by extracting the first three terms of a Taylor series expansion of the expression, where said first three terms are reformulated as a set of log domain equations. Then, depending in which quadrant of the plane the signal lies, either outputting the arctangent value as the instantaneous phase if the signal lies in the first or fourth quadrants or outputting the arctangent value plus $\pi$ radians if the signal lies in the second quadrant, or outputting the arctangent value minus $\pi$ radians if the signal lies in the third quadrant. The quadrant can be determined by encoding the signum values of the real and imaginary components onto a two-bit signum code having a value of 00 when its corresponding component has a value of zero, 01 when its corresponding component has a signum value of +1 or 11 when its corresponding component has a signum value of -1, and inspecting the least significant bits of the two signum codes to determine within which quadrant the signal lies: 00 for the first quadrant, 01 for the second quadrant, 10 for the third quadrant and 11 for the fourth quadrant.

The first three terms of the Taylor series expansion of the arctangent expression are: a constant term; a linear term; and a cubic term. Each of these terms may have different values depending on whether Im/Re complies with:

a first condition where Im/Re lies between -1 and 1, inclusive, wherein the log domain transformation of said first three terms is: $0 - (-(\text{sgn}(\text{Im}) \times \text{sgn}(\text{Re})) \times 2^{\wedge}((\log_2(|\text{Im}|) - \log_2(|\text{Re}|)) - \log_2(\pi)) + (\text{sgn}(\text{Im}) \times \text{sgn}(\text{Re})) \times 2^{\wedge}(3 \times (\log_2(|\text{Im}|) -$

$\log_2 (|Re|)) - \log_2 (3)))$; or

a second condition where $(Im/Re) > 1$, wherein the log domain transformation of said first three terms is: $\pi/2 - ((sgn(Im) \times sgn(Re)) \times 2^{\wedge}(-( \log_2 (|Im|)- \log_2 (|Re|))) - (sgn(Im) \times sgn(Re)) \times 2^{\wedge}(- 3 \times (\log_2 (|Im|)- \log_2 (|Re|)) - \log_2 (3)))$; or

a third condition where $(Im/Re) <-1$, wherein the log domain transformation of said first three terms is: $- \pi/2 - (-(sgn(Im) \times sgn(Re)) \times 2^{\wedge}(-( \log_2 (|Im|)- \log_2 (|Re|))) + (sgn(Im) \times sgn(Re)) \times 2^{\wedge}(-3 \times (\log_2 (|Im|)- \log_2 (|Re|)) - \log_2 (3)))$.

The method for approximating the result of the expression arctangent(Im/Re) comprises:

providing binary logarithmic conversions of the real and imaginary components of the oscillatory signal using a binary log converter, the binary logarithmic conversions of the real and imaginary components being substantially equal to, respectively, $\log_2 (Re)$ and $\log_2 (Im)$;

providing signum values for the real and imaginary components of the oscillatory signal and encoding said signum values to provide signum codes for the real and imaginary components of the oscillatory signal, said signum codes being 00 when the corresponding signum value of 0, 01 when the corresponding signum value is +1 and 11 when the corresponding signum value is -1;

providing a comparator circuit to provide:

a value of zero as the value of the constant term when the oscillatory signal meets the first condition whereupon the comparator circuit also provides a first data output having a value equal to the binary logarithmic conversion of the real component of the oscillatory signal, as well as a second data output having a value equal to the binary logarithmic conversion of the imaginary component of the oscillatory signal;

an assertion of a flag when either of the second or third conditions are met whereupon it also provides a value of $\pi/2$ as the value of the constant term where the first data output has a value equal to the two's complement of the binary logarithmic conversion of the real component of the oscillatory signal and the second data output has a value equal to the 2's complement of the binary logarithmic conversion of the imaginary component of the oscillatory signal;

providing a first programmable combinatorial logic cell as described above, the first cell being configured to receive the first and second data outputs from the comparator circuit at its first and second data input ports, the remaining data input ports of the first cell being either hardwired to provide a value of zero or being provided with a value of zero from a memory; wherein:

the control line pair of the control input port of the first cell corresponding to the first data input port receiving the signum code of the real component of the oscillatory signal; the control line pair of the control input port of the first cell corresponding to the second data input port receiving the signum code of the imaginary component of the oscillatory signal;

said first cell providing the linear term at its output port;

providing a second programmable combinatorial logic cell as described above, programmed to perform an exponentiation of first data output of the comparator circuit and an exponentiation of the second data output of the comparator circuit, where the power value is 3, and further programmed to perform a multiplication of the thus exponentiated first and second data outputs of the comparator circuit, the third data input port of the second cell being either hardwired to a value of $\log_2 (3)$ or being provided with a value of $\log_2 (3)$ from a memory; the remaining data input ports of the second cell being either hardwired to provide a value of zero or being provided with a value of zero from a memory; wherein:

the control line pair of the control input port of the second cell corresponding to the first data input port receiving the signum code of the real component of the oscillatory signal; the control line pair of the control input port of the second cell corresponding to the second data input port receiving the signum code of the imaginary component of the oscillatory signal;

said second cell providing the cubic term at its output port;

providing a term assembler to provide a pre-arctangent value by subtracting the linear term and the cubic term from the constant term; and

the result of the expression either being equal to the pre-arctangent value if said flag is asserted or being equal to the 2's complement of said pre-arctangent value if said flag is not asserted.

According to another embodiment, it is possible to provide said instantaneous phase value as a normalised value which falls between -1 and +1 radians. In this case, instead of configuring the hardware to approximate the result of the expression arctangent(Im/Re), the hardware is configured to approximate the value of the expression $(1/\pi) \times$ arctangent(Im/Re). The constant term, linear term and cubic term in this case have potentially different values depending on whether Im/Re complies with:

a first condition where Im/Re lies between -1 and 1, inclusive, wherein the log domain transformation of said first three terms is: $0 - (-(sgn(Im) \times sgn(Re)) \times 2^{\wedge}((\log_2(|Im|) - \log_2(|Re|)) - \log_2(\pi)) + (sgn(Im) \times sgn(Re)) \times 2^{\wedge}(3 \times (\log_2(|Im|) - \log_2(|Re|)) - (\log_2(\pi) + \log_2(3))))$; or

a second condition where $(Im/Re) > 1$, wherein the log domain transformation of said first three terms is: $\frac{1}{2} - ((sgn(Im) \times sgn(Re)) \times 2^{\wedge}(-(\log_2(|Im|) - \log_2(|Re|)) - \log_2(\pi)) - (sgn(Im) \times sgn(Re)) \times 2^{\wedge}(-3 \times (\log_2(|Im|) - \log_2(|Re|)) - (\log_2(\pi) + \log_2(3))))$; or

a third condition where $(Im/Re) < -1$, wherein the log domain transformation of said first three terms is: $-\frac{1}{2} - (-(sgn(Im) \times sgn(Re)) \times 2^{\wedge}(-(\log_2(|Im|) - \log_2(|Re|)) - \log_2(\pi)) + (sgn(Im) \times sgn(Re)) \times 2^{\wedge}(-3 \times (\log_2(|Im|) - \log_2(|Re|)) - (\log_2(\pi) + \log_2(3))))$.

Consequently: whereas in the non-normalised embodiment, the constant term would be $+/-\pi/2$, the constant term is $+/-\frac{1}{2}$ in the normalised embodiment; the first would be configured to receive a value of $\log_2(\pi)$ at its third data input port; the second cell would be configured to receive $\log_2(\pi) + \log_2(3)$ at its third data input port; and the offset values applied to the arctangent approximation to arrive at the instantaneous phase would be $+/-1$ radians instead of $+/-\pi$ radians.

According to a preferred embodiment, the neurostimulation control system, including a front-end neural signal capture circuit, a signal filtering circuit, a feature extraction circuit and a neural stimulation control circuit, may be realised as a System on Chip configuration, preferably on a single chip.

Although the present description discloses the use of the invention in the domain of the extraction of electrophysiological features of neurophysiological oscillatory signals, the same principals of reformulating mathematical functions using the Logarithmic Number System (LNS) may be applied in any application where there is a need to realise such functions, especially when they involve complex operations such as multiplication, division and exponentiation (squares, cubes, roots etc), in a power efficient manner using area efficient hardware with fixed-point representation, with a tolerable small drop in accuracy.

## BRIEF DESCRIPTION OF THE DRAWINGS

The concepts described herein will be better understood thanks to the detailed description which follows, along with the accompanying drawings, in which the following is shown:

figure 1, showing a high-level block schematic diagram of a System-on-Chip VLSI circuit in which one or more embodiments of the present invention may be deployed;

figure 2, in which a schematic representation of a programmable combinatorial logic cell according to an embodiment of the present invention is illustrated;

figure 3, in which an electrical schematic representation of a hardware programmable logarithmic arithmetic unit according to an embodiment of the present invention is illustrated in the context of an electrical circuit block;

Figure 4, showing an arrangement of shift registers and associated adders/subtractors which may be deployed either, within a cell according to an embodiment of the invention or in a circuit within which an embodiment of the cell is deployed, for allowing for exponentiation functions to be performed by the cell;

Figure 5, in which a spectral power extractor according to an embodiment of the present invention is shown;

Figure 6, in which an amplitude extractor according to embodiment of the present invention is shown;

Figure 7, illustrating a log-domain Taylor series phase extractor according to an embodiment of the present invention; and

Figure 8, in which a log-domain phase-locking value or phase amplitude coupling extractor according to an embodiment of the present invention is shown.

## DETAILED DESCRIPTION

A goal of the present disclosure is to provide hardware for performing processing-intensive functions in an energy-efficient manner, the hardware being optimised to minimise its on-chip footprint size. Such functions include multiplication, division and exponentiation functions such as squares, cubes and roots, and so on. A hardware cell is disclosed, where the cell can be configured to provide any from said functions through simple hardware and/or software programming of the cell and/or its supporting components within a system-on-chip.

A system-on-chip comprising one or more embodiments of the present invention may find use in electronics circuits and systems for implantation into a body of a human subject for the diagnosis and treatment of certain neural conditions, where it is important that the system dissipate as little heat as possible while delivering fast and efficient processing power. Deep brain stimulation (DBS) is a well-established therapy, for example, for the treatment of movement disorders such as in Parkinson's Disease and essential tremor. Excessive interregional connectivity in a subject is an indicator of pathological brain states in Parkinson's Disease and in network-based diseases such as depression. It is known that the delivery of DBS locked to the phase of ongoing neural oscillations in a subject may be effective in regulating movement disorders in the subject.

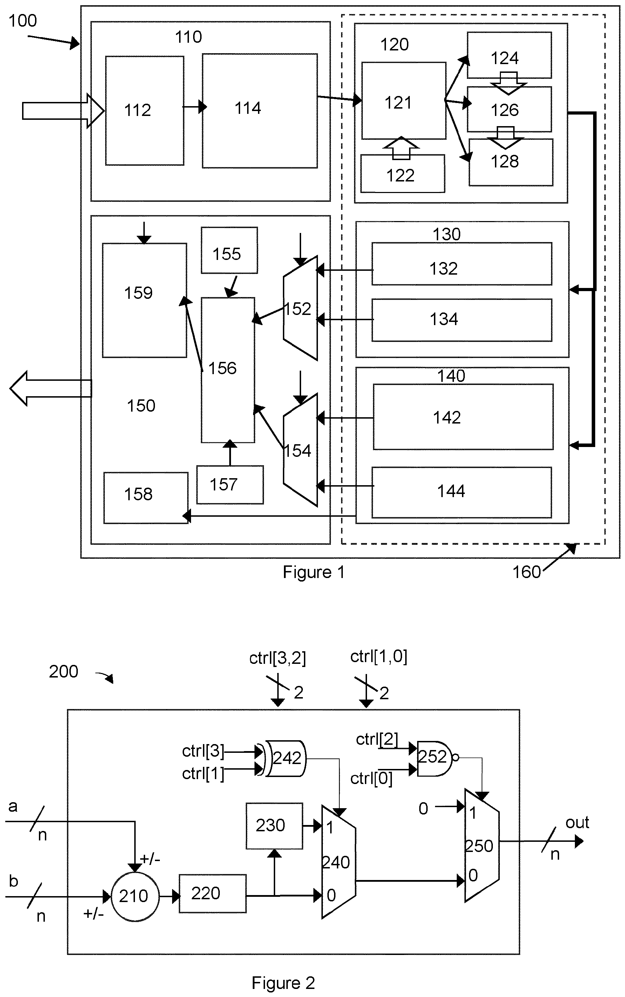

Figure 1 shows a schematic block diagram of a system **100** in which one or more embodiments of the present invention may be deployed. The system may be implemented as a system-on-chip (SoC), and it provides for continuous monitoring of neural connectivity and delivery of phase-locked deep brain stimulation (DBS) for regulating abnormal brain connectivity in subjects who exhibit neurological and/or psychiatric disorders. The system includes a multi-channel neural connectivity extractor for receiving multiple channels of local field potentials (LFPs) from multiple regions of the brain of the subject and extracting instantaneous phase and amplitude and cross-regional neural connectivity measurements such as phase locking value (PLV) and phase-amplitude coupling (PAC). The system may be used to monitor the instantaneous phase and amplitude of neural oscillatory signals in a subject, as well as the spectral energy of the signals, and to extract cross-regional neural connectivity measurements such as PLV and PAC. Through appropriate, flexible, combinations of phase measurement, amplitude measurements, spectral energy (power) measurements, as well as the cross-regional neural connectivity measurements, a multi-channel stimulator comprised within the system may be used to provide multi-channel, charge-balanced, neurostimulation to administer the phase-locked deep brain stimulation signals to treat various pathological neural conditions in the subject.

As shown in figure 1, the phase-locked beep brain stimulation system **100** has a neural recording front end **110** for receiving a plurality of channels of biological signals, such as local field potentials (LFP), more specifically a neurophysiological oscillatory signal from the brain of a subject. The neural recording front end comprises a switching matrix **112** and, in this example, 32 channels of low-noise analogue front-end amplifiers **114**. According to a particular embodiment, the 32-channel analogue front end comprises two modules, each integrating 16 low-noise amplifiers (LNAs) that share a Gm-C filter and a 10-bit SAR ADC. In each of these two modules, the differential inputs of the 16-channel LNAs interface flexibly with four leads, each containing 8 electrodes, through a programmable input switch matrix. This switch matrix is used to select different electrode configurations, which are then passed to the LNAs. The outputs are subsequently multiplexed into a gain stage and then converted using an analogue-to-digital converter.. The thus-amplified neural oscillatory signal is passed to a neural connectivity processor **160** for extracting the electrophysiological features of the oscillatory signal. The neural connectivity processor **160** comprises an FIR filter **120** configured to perform averaging **124** bandpass filtering **126** and to perform Hilbert transforms filtering (HBF) **128** on the 32 channels of neural signals. According to an embodiment, the neural connectivity processor integrates averaging, bandpass filtering (BPF) and Hilbert transform filtering (HBF) using a time-division multiplexed (TDM) single symmetrical filter bank and an adder tree **121** fed from a memory with log-domain FIR coefficients **122**. Up to 350 taps may be used in the bandpass filter, with the Hilbert filter featuring 51 taps for extracting the real and imaginary components of the oscillatory signals.

As shown in figure 1, the neural connectivity processor further comprises circuitry for extracting the electrophysiological features of the oscillatory signal using the real and imaginary components of the signal provided by the FIR. As shown in figure 1, the neural connectivity processor comprises a phase extraction module **132** for extracting the instantaneous phase of the oscillatory signal, an amplitude extraction module **134** for extracting the instantaneous amplitude of the oscillatory signal. These two modules may use a sample clock of around 1kHz, for example. The neural connectivity processor may still further comprise a phase locking value (PLV) extraction module **142** for extracting the phase locking value over a predetermined sample window of say 250 to 1000 samples. This value may be used to assess the phase synchronisation between two intra-band neural signals. The neural connectivity processor may also comprise a phase-amplitude coupling (PAC) extraction module **142,** for extracting, over the predetermined sample window, the phase-amplitude coupling. This value may be used to assess how the phase of a low-frequency oscillation modulates the amplitude of a high frequency oscillation.

The neural connectivity processor may further comprise a spectral power extraction module **144** for extracting, over the predetermined sample window, the spectral power of the bandpass filtered oscillatory signal.

According to an embodiment of the invention, the FIR filter, phase extraction module, amplitude extraction module, phase locking value extraction module, phase-amplitude coupling extraction module and spectral power extraction modules are all configured to operate on logarithmic domain values, which as will be described later, allows for efficient hardware circuit layouts to be used, which have advantageously low power consumption characteristics, allowing for power efficient processing to be achieved using hardware which is efficient in its use of circuit real estate. Accordingly, it can be said that embodiments of the present invention comprise a log domain FIR **120,** a log domain phase extraction module **132,** a log domain amplitude extraction module **134,** a log domain phase locking value extraction module **142,** a log domain phase-amplitude coupling extraction module **142** and a log domain spectral power extraction module **144.** All of these modules can be said to be comprised within a log domain neural connectivity processor **160,** shown in figure 1.

The phase-locked beep brain stimulation system may further comprise a stimulator controller **150** to receive the extracted electrophysiological features of the oscillating signal to provide appropriate stimulation should some pathological neural activity be detected, for example when excessive PLC or PAC are extracted. According to an embodiment, the stimulator controller may comprise a random phase generator **155** an event detector **156,** a threshold memory **157** and a classifier **158** for computer aided interpretation of the electrophysiological features. A multi-mode stimulation controller **159** having a mode selector input may be provided. A first multiplexer **152** may be provided, controlled by a sample frequency selector, to provide either the extracted phase or the extracted amplitude to the event detector. A further multiplexer **154** may be provided, controlled by a selector of window width, to provide either the PLV, the PAC or the spectral power to the event detector.

According to an embodiment, a basic hardware building block is provided for use in at least some of the different blocks comprised within the log domain neural connectivity processor shown in figure 1. The basic hardware building block may be described as a programmable combinatorial logic cell, which is configurable for performing a cell function on one or more data input values which are fed to the cell. The data input values may be derived from signals which appear in an electronic circuit within which the cell is deployed. Figure 2 illustrates a first embodiment of the programmable combinatorial logic cell. This version of the cell **200** has two data input ports for receiving two digital data input values **a, b,** and an output port, **out,** for providing an output value from the cell. The data inputs are n-bits wide, as is the data output port. According to a preferred embodiment the input and output ports are 10 bits wide, as this provides a sufficient level of accuracy when the cell is used in the various circuit blocks of the neural connectivity processor. An adder/subtractor **210** within the cell may add the values of the two inputs to produce an exponent value when the adder/subtractor is appropriately programmed to do so. The programming may be done in hardware or in software. Alternatively, the adder/subtractor may be programmed to subtract one input value from the other to provide the exponent value. Alternatively again, the adder/subtractor may be programmed to invert the polarity of the first input and then subtract the value of the second input to provide the exponent value. An antilog converter **220** within the cell takes the exponent value and produces an antilog value by raising a value of 2 to the power of the exponent value, in other words, by producing the binary antilog of the exponent value. Consequently, depending on how the cell in figure 2 is programmed, the antilog value may be 2^(a+b) or 2^(-a+b) or 2^(a-b) or 2^(-a-b) (i.e. $2^{(a+b)}$ or $2^{(-a+b)}$ or $2^{(a-b)}$ or $2^{(-a-b)}$).

According to a preferred embodiment of the cell, the antilog converter may be conveniently and efficiently implemented in hardware using a barrel shifter. Such techniques are well known from the prior art, based on the Mitchell Scheme for approximating binary antilogarithms using numbers in binary form.

As shown in figure 2, the cell further comprises a 2's complement generator **230** configured to generate the 2's complement of the antilog value. Also shown in figure 2 is a first control input port. In this example, the first control input port is 4 bits wide. It may be used to receive commands comprising encoded instructions to either pass the antilog value to the output port, pass the 2's compliment of the antilog value to the output port, or reset the output port to have a value of zero. modify or reset the output value at the output port of the cell. Some decoding logic is also shown in figure 2 for decoding the instructions from the command at the control input port. A NAND gate is shown, having as inputs the least significant bit and the second most significant bit of the first control input port, with its output being used to control an output multiplexer. Whenever either, or both, of these control bits have a value of zero, the output of the cell is reset to have a value of zero. When neither of these bits has a value of zero, the output of a first multiplexer is passed to the output port of the cell. The first multiplexer has the antilog value and the 2's complement of the antilog value as inputs and is controlled by the output of an EXOR gate whose inputs are the most significant bit and the second least significant bit of the control input port. Consequently, whenever these two control bits have the same value, the antilog value is passed to the output multiplexer and whenever these two control bits have opposite values, the 2's compliment of the antilog value is passed to the output multiplexer.

The first control input port therefore can be used to either reset the output port of the cell to a value of zero or to let the antilog value be passed to the output of the cell or to let the 2's compliment of the antilog value be passed to the output port of the cell: in other words inverting the polarity of the antilog value at the output port of the cell. This is useful in embodiments of the present invention because the cell is usually used to perform a given function on one or more signals, or operands, which are present in a circuit in which the cell is deployed. The operands are usually transformed into logarithmic number system values (LNS). By doing this, the sign (or polarity) of the operand is lost because in the LNS values are absolute values, so even if the operand had a negative value, the transformed version will only be an absolute value. Consequently, the cell would not be able to apply any arithmetic rules for dealing with negative numbers when performing its programmed function, and so the first control input may be used to pass on the information concerning the polarity of the original operand from which the cell's input was derived, so that the cell may apply the relevant arithmetic rules for dealing with polarities. Similarly, the cell is programmed to do additions and/or subtractions of its input data values. Since the input data values are usually logarithmic transformations of other operands, this is equivalent to performing multiplication and/or division of the operands. Since there is no defined value for a logarithmic transformation of the value 0, it is impossible to have the cell properly deal with a value of zero as an operand value and so it is impossible for the cell to provide correct results when an operand has a value of zero. By using the first control input port to send a reset instruction to the cell, the output of the cell can be reset to zero when any of the operands has a value of zero, which is what would happen in the case of a multiplication function where one of its operands has a value of zero.

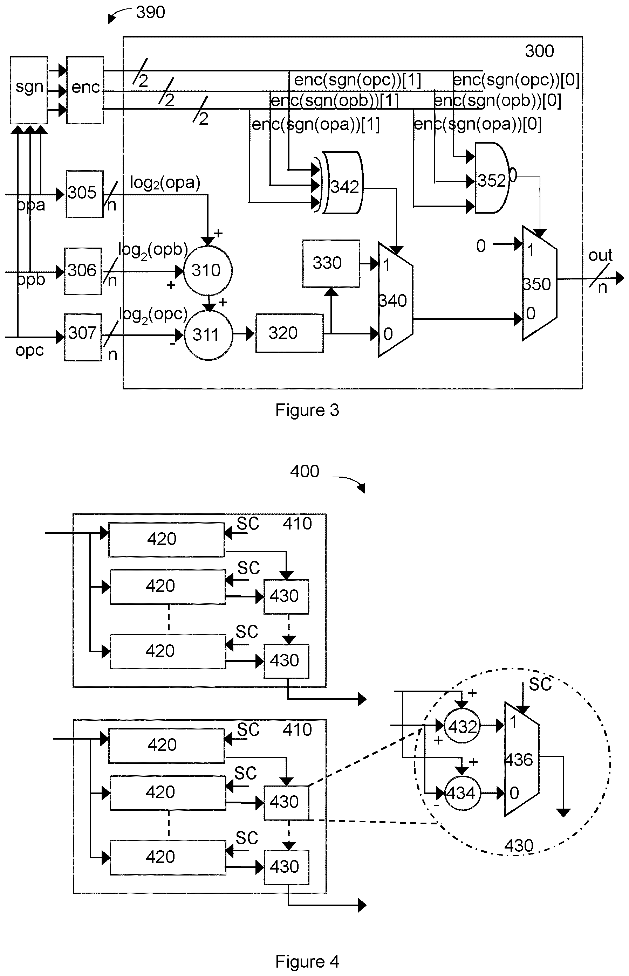

The cell shown in figure 2 can be said to be illustrated "out of context". As mentioned briefly above, according to embodiments of the present invention, the cell is used to perform functions on values which have been transformed into binary logarithmic format. Figure 3 shows an embodiment of the cell having three inputs. Other embodiments exist where the cell has more than three inputs. In figure 3, the cell is placed in context with respect to how it is used in preferred embodiments of the present invention. In use, the cell may be placed into an electronic circuit block where a given function is to be performed on one or more operands whose values are encoded over a plurality of digital signals within the electronic circuit. Such operands are known as physical operands because their value can be derived from signals within the circuit, for example the value at a digital port somewhere on the circuit. Virtual operands may also exist and will be described later. When the cell is placed it is arranged for the operands upon which a given function is to be performed to be transformed into their binary logarithmic approximations. This can be done in hardware very conveniently using leading ones detectors and barrel shifters, as is well known in the domain based on the Mitchell Scheme for approximating binary logarithms using numbers in binary form.

Figure 3 shows a cell **300** according to an embodiment of the invention in the context of an electronic circuit **390**, the cell being programmed to perform an arithmetic function opa × opb ÷ opc. The cell's data inputs are provided as binary logarithmic transformations of operands opa, opb and opc within the electronic circuit. The value of the operands, opa, opb and opc are available at ports of the electronic circuit in which the cell is deployed. Since their values are available at physical ports within the circuit, opa, opb and opc are said to be physical operands. Binary logarithmic converters **305, 306, 307** are made available in the electronic circuit to convert opa, opb and opc to their binary logarithmic equivalents and those binary log values are passed to the three data input ports of the cell. In order to get the information about the polarity of the three operands, a signum generator **sgn** is used to generate signum values for opa, opb and opc. A signum has a value of 0 when its corresponding operand has a value of 0, a value of +1 when the corresponding operand has a positive value and a value of -1 when the corresponding operand has a negative value. The signum value of opa may then be encoded **enc** onto a first pair of control lines, the signum value of opb may be encoded onto a second pair of control lines, and the signum value of opc may be encoded onto a third pair of control lines. The first, second and third pairs of control lines may be concatenated to provide a six-bit wide control input value for the cell. According to an embodiment, the encoding is 00 for a signum value of 0, 01 for a signum value of +1 and 11 for a signum value of -1. In figure 3, the cell is shown in its programmed state where the adder/subtractor is configured to add $\log_2(|opa|)$ to $\log_2(|opb|)$ and to subtract $\log_2(|opc|)$. The XOR gate **342** and the NAND gate **352** of the decoder are three-input gates to take account of opa, opb and opc's contribution to the first control input port's constituent control lines. If at least one of the operands has a value of zero, the NAND gate will cause a value of 0 to be passed to the output port of the cell. If an odd number of operands have negative values, then the 2's complement of the antilog value will be passed to the output port of the cell. If either none of the operands have negative values or two of the operands have negative values, then the antilog value will be passed to the output port of the cell. Consequently, the output value of the cell is: sgn(opa) × sgn(opb) × sgn(opc) × $2^{\wedge}(\log_2(|opa|) + \log_2(|opb|) - \log_2(|opc|))$, which is equivalent to opa × opb ÷ opc. Used in this manner, the cell therefore operates as a logarithmic arithmetic unit (LAU), transforming the operands to their binary logarithmic representations and performing multiplication/division functions using simpler adder/subtractor hardware. It is worth noting that different encoding and decoding schemes may be used according to different embodiments of the LAU, however the scheme described above is one which is used in preferred embodiment.

In a case where not all of the operands are physical operands, for example where opc would be a virtual operand having a constant value of 1, say, there may be no physical port or combination of signals in the circuit which express the value of opc. Instead of using a binary log converter to generate $\log_2(|opc|)$, the data input port corresponding to opc could simply be hardwired to 0, which is binary logarithm of 1, or the data input port could be made to read the value 0 from a memory. The signum generator would still be used to generate signum values for opa and opb. However, since opc is constant and its value is positive, it will not affect the output value of the cell. So, it is possible to use a 4-bit wide first control input port and 2-input EXOR and NAND gates in the decoder to deal with the encoded signums of opa and opb. Alternatively, a 6-bit wide first control input port could be used, with the control line pair corresponding to opc being set to a value of 01 and three input EXOR and NAND gates being used in the decoder.

The NAND gate ensures that should any non-zero (positive or negative) value be present at both operand inputs a and b, as indicated by the LSBs of sgn(a) and sgn(b) having a value of 1, then the other input of the output multiplexer (the one which is not tied to zero) will be fed to the output of the cell. Thanks to the first multiplexer, the value at the other input of the output multiplexer depends on the values of the MSBs of the signum inputs. If both are 1, indicating that both operands are negative, then then the first multiplexer feeds a value of $2^{\wedge}(\log_2|a|+\log_2|b|)$ to the input of the output multiplexer. Likewise, should both the LSBs of sgn(a) and sgn(b) be 0, indicating that either both operands a and b are zero or at least one has a positive value, then the first multiplexer also sends the value $2^{\wedge}(\log_2|a|+\log_2|b|)$ to the input of the output multiplexer. On the other hand, should only one of the LSBs of sgn(a) or sgn(b) be zero while the other one is one, then the two's complement of $2^{\wedge}(\log_2|a|+\log_2|b|)$ is sent to the input of the output multiplexer, which is equivalent to sending the negative value of $2^{\wedge}(\log_2|a|+\log_2|b|)$ to the input of the output multiplexer.

Figure 3 shows a logarithmic arithmetic unit having three data input ports. Other configurations are of course possible, with more data input ports, in which case the EXOR gates and the NAND gates may have more inputs. Unused data input ports may be tied to zero, with the corresponding control line pairs being set to 01 to reflect a positive, constant, value of 1 as a virtual operand. Less data input ports is also possible, although for a multiplication or division function, the minimum number of data input ports should be two.

By multiplying or dividing an LNS value by a factor before doing the add/subtract operation in the cell, the LAU can be made to perform exponentiation functions. For example, by multiplying $\log_2$(opa) by n, this is equivalent to performing

opa$^n$. By dividing $\log_2$(opa) by n, this is equivalent to performing $\sqrt[n]{opa}$. Using a barrel shifter, it is very easy to realise multiply and divide functions on values expressed as binary logarithmic numbers. By performing a bitwise left shift by one, two or three positions, for example, a multiply by 2, 4 or 8 is realised in a very efficient manner. By performing a bitwise arithmetic right shift by one, two or three positions, a divide by 2, 4 or 8 is realised in an efficient manner. To multiply by numbers which are not powers of 2, such as 3, for example, a combination of barrel shifters and adders may be used, where the barrel shifter is used to obtain a multiply by 2 and the adder is used to add the operand to the result of the multiply, thereby obtaining a multiply by three. To obtain a multiply by 7, for example, the barrel shifter may be used to obtain multiply by 8, then a subtractor may be used to subtract the operand from the shifted value to obtain multiply by 7. Similarly, using the barrel shifter to do right shifts a combination of barrel shifters and adders/subtractors may be used to obtain division factors which are not powers of ½ (e.g. ½, ¼, 1/8, etc...). Logarithmic arithmetic units programmed in this manner may have a single data input port. If only one operand is to be involved in a function and the logarithmic arithmetic unit has more than one data input port, then the unused data input ports may be tied to 0 and their corresponding control line pairs attributed a value of 01, indicating that their corresponding virtual operands have a value of 1, which is a positive number, with a signum value of +1.

The technique described above may be used to allow logarithmic arithmetic units according to embodiments described herein to perform exponentiation functions. The necessary barrel shifters and associated adders/subtractors may be included inside the cell, after the data input port and before the adders/subtractors already present in the cell. Alternatively, the barrel shifters and their associated adders/subtractors may be placed outside of the cell, between the binary logarithmic converters and the data input ports of the cell.

The shifters and their associated adders/subtractors may be hardware programmed to perform a predetermined exponentiation function. Alternatively, they may be software programmed to do so. Figure 4 shows an arrangement of shift registers and their associated adders/subtractors. If an arrangement such as this were to be placed within the logic cell of the present invention, it would be placed between the data input ports and the programmable adders/subtractors which are already present in the cell. The example shown in figure 4 is configured to provide programmable multiplication or division of the cell's data inputs for a cell with 2 data input ports, but it is obvious that the arrangement can be expanded for use with cells having any number of data input ports. Within one shifter 410, corresponding to one data input port of the cell, there are a plurality of programmable barrel shifters 420 configured in parallel with programmable adders/subtracters 430 placed between their outputs. The shift direction of the shifters and the number of positions to be shifted, as well as the number of times a given data input value is to be added or subtracted from a thus-shifted data input value, may be software programmable by providing a second control input port on the cell for a second command comprising instructions relative to these features. Figure 4 shows an example of how a programmable adder/subtractor 430 may be built, using an adder 432 to add a first and second input and a subtractor 434 to subtract a second input from a first input, in combination with a multiplexer 436, a software control bit SC may be used to select between the sum of the inputs and the difference between the inputs. A further decoder in the cell may decode the instructions from the second control input port to provide appropriate control signals SC to the barrel shifters and to the adders/subtractors associated with the barrel shifters. Alternatively, it is possible to provide a similar arrangement of shifters and their associated adders/subtractors outside of the logarithmic arithmetic unit. Again, these may be hardware or software programmable. It is worth noting that the software programmable adders/subtractors illustrated in figure 4 may also be used to provide the addition/subtraction function within the cells illustrated in figures 2 and 3. In this case, for software programmability to be an option, the first control input port and the decoder would have to be modified to take account of the instructions needed to programme the adders/subtractors.

A goal of the present invention is to perform a predetermined function on one or more of the signals of interest somewhere in the chip, where the predetermined function may be a complex mathematical function such as a multiplication or a division or an exponentiating function. By using the cells or the logarithmic arithmetic units described above and presenting logarithmic transformations of the operands of the mathematical function at the data input ports of the cell or unit and using the cell to perform simpler functions such as additions, subtractions and/or bitwise shifts on the transformed values at the data inputs of the cell and retransforming the result to provide an output value, this goal is met. Circuits which include the cells of the present invention consume less power and a more efficient use of circuit real estate is achieved when compared to standard circuits for performing such complex mathematical functions.

Logarithmic arithmetic units according to an embodiment of the present invention may be deployed in any of the circuit blocks shown in figure 1 which make up the log-based neural connectivity processor. For example, the FIR filter, according to an embodiment of the present invention, is a symmetrical FIR filter, which advantageously reduces the number of weights required to half of the number that would have been required had a symmetrical filter not been used. Normally, each tap of the filter would require hardware multipliers to realise multiplication functions. In embodiments of the present invention, the complexity of each tap is further reduced using logarithmic arithmetic units of the invention to realise the multiplication functions, thus employing simpler adders/subtractors to perform the multiplication functions and so saving in chip real estate and in power consumption.

Consequently, it may be said that the log-domain neural connectivity processor comprises a log-domain FIR. According to an embodiment, which uses 10-bit log-domain multipliers (i.e. using adders instead of multipliers) a similar or superior level of precision is achievable across all frequency bands of interest when compared with a traditional quantised multiplier. Furthermore, a significant reduction in power consumption may be achieved while also optimising the chip real estate occupied by the hardware for achieving the multiplication functions within the symmetrical filter bank. According to an embodiment, the time-division multiplexed log-domain FIR unit, having a filter length of L, may be described by the following equation:

$$\sum_{i=0}^{\left(\frac{L}{2}\right)-1} sgn(wi) sgn(yi) 2^{(\log_2|wi| + \log_2|yi|)}\ ,$$

where $yi = xi + x_{L-i-1}$; i is the filter tap number; xi are the filter inputs; and wi are the filter weights. Sgn is the signum function, whose value is 0 when its operand has a value of zero, +1 when its operand has a value which is greater than 0 and -1 when its operand has a value which is less than zero. The coefficients may be stored in a memory accessible by the log-domain FIR filter, where the coefficient values are {sgn(wi), |log2(|wi|)|} (10 bits per coefficient).

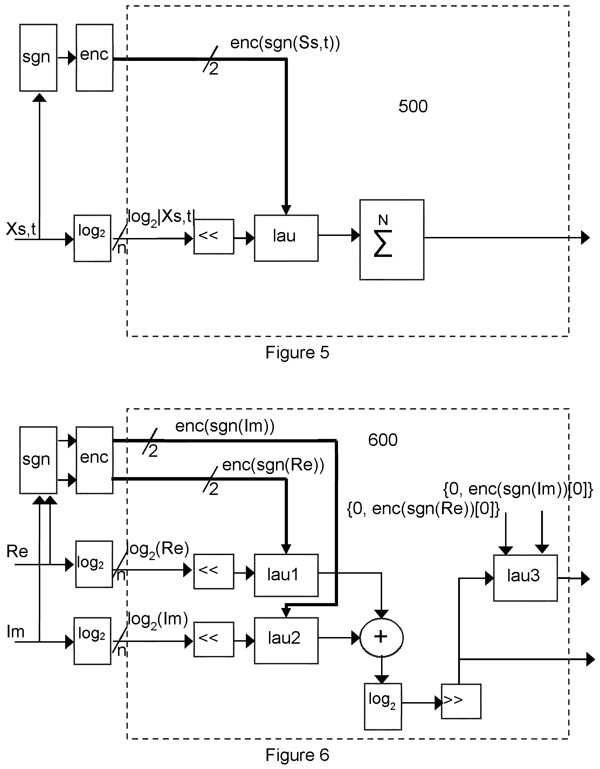

According to an aspect, the log-domain spectral power extractor in the log-domain neural connectivity processor shown in figure 1 may be constructed using a logarithmic arithmetic unit according to an embodiment of the present invention. As shown in figure 1, the spectral power is extracted over a predetermined sample window. The sample window may be between 0.25 seconds and 1 second, which would allow for between 250 and 1000 samples of the oscillatory signal to be taken within the sample window. Figure 5 illustrates a spectral power extractor according to an embodiment of the present invention, in which is deployed a logarithmic arithmetic unit according to an embodiment of the invention. Spectral power extraction generally involves performing a square operation, which is computationally intensive. By reformulating the spectral power extraction equation using LNS, the following equation may be obtained:

$$\frac{1}{N}\sum_{i=0}^{N} x_{BAND,t}^2 = \frac{1}{N}\sum_{i=0}^{N} 2^{(2\log_2(x_{BAND,t}))}$$

, where N is the number of samples in a feature extraction window and $x_{BAND,t}$ represents the bandpass-filtered neural signal. The above LNS-based therefore replaces the square operation by a shift operation in the logarithmic domain. This implementation provides a suitable level of accuracy with reduced hardware, as shown in Figure 5.

In figure 5, a one-position left-shift barrel shifter is shown for generating a value which is twice the value of logs(|Xs,t|). If the LAU has more than one data input port, then the unused data input ports may be tied to 0 or fed from a memory having a value of 0. One control line pair of the control input port is fed from the encoded signum of the output from the FIR. The output of the LAU is the square of the signal from the FIR filter and is accumulated over the sample window.

According to another aspect, the log-domain amplitude extractor in the log-domain neural connectivity processor shown in figure 1 may be constructed using two or three programmable logarithmic arithmetic units according to an embodiment of the present invention. Whereas the more accurate L2-norm for extracting the amplitude of an oscillatory signal using a hardware implementation is typically challenging due to the complexity of square root and square operations, performing amplitude extraction from the real and imaginary components of the oscillatory signals, provided by the FIR filter, using logarithmic arithmetic units according to an embodiment of the invention to perform the square root of the squares of the real **Re** and imaginary **Im** components of the oscillatory signal allows for simpler shifting operations to be performed in the logarithmic domain, as illustrated in the following equation:

$$\sqrt{Re^2 + Im^2} = 2^{0.5\log_2\left(2^{2\log_2|Re|} + 2^{2\log_2|Im|}\right)}$$

This implementation provides a good level of accuracy, thus allowing for efficient implementation of the function in hardware. Figure 6 illustrates an amplitude extractor **600** according to an embodiment of the present invention. The amplitude extractor receives the $\log_2$ converted real **Re** and imaginary **Im** components of the oscillatory signals from the FIR filter as well as the encoded signums of the real and imaginary components of the oscillatory signals. A first and second programmable logarithmic arithmetic unit **lau1, lau2** are used to provide the square of the real component and the square of the imaginary component from 1-position left-shifted versions of the real and imaginary components. This may be achieved using an LAU which already has the appropriate barrel shifter integrated or by placing the barrel shifters at the required places in the circuit. The amplitude extractor further comprises an adder to add the values of twice the real component and twice the imaginary components and a binary log converter to generate a binary logarithm transformation of the sum of twice the real component and twice the imaginary component, as well as a 1-position right-shift shift register, preferably a barrel shifter, to generate a value which is half of the binary logarithm transformation of the sum of twice the real component and twice the imaginary component. This value is equivalent to the binary logarithm transformation of the amplitude of the oscillatory signal and it may be output from the amplitude extraction module for any circuits that may need to work on log-based values. The amplitude extractor may further comprise a third logarithmic arithmetic unit to perform the antilog of this value, thus further providing an output having the value of the amplitude of the oscillatory signal, for use by any circuits which do not require log-domain values. The three LAUs used in the amplitude extractor module use only one input each. If the LAUs have more than one data input port, then the unused data input ports may be tied to zero. One control line pair of the control input port of the first LAU (lau1) may receive the encoded signum of the real component. Any remaining control line pairs in the control input port may be tied to a value of 10. Similarly, for the second LAU (lau2), one control line pair may receive the encoded signum of the imaginary component and any remaining control line pairs tied to a value of 01. Two control line pairs from the control input port of the third LAU (lau3) may be used: a first pair receiving a concatenation of the values 0 and the least significant bit of the encoded signum value of the real component of the oscillatory signal, while a second pair may receive a concatenation of the values 0 and the least significant bit of the imaginary component of the oscillatory signal.

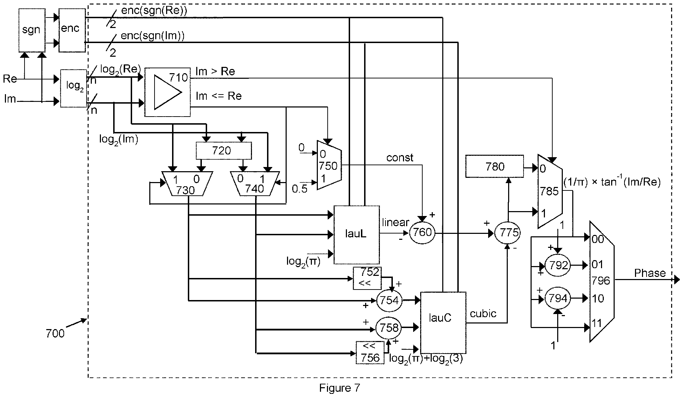

According to still another aspect, a new approach is proposed for performing phase extraction. Figure 7 illustrates a log-domain Taylor series phase extractor **700** according to an embodiment of the present invention, in which is deployed two programmable logarithmic arithmetic units **lauL, lauC,** according to embodiments described herein. The phase extractor receives LNS-converted versions of the real and imaginary components of the oscillatory signal **Re, Im,** as well as the encoded signums of the real and imaginary components, and from this generated an approximation of the arctangent function $(1/\pi) \times \tan^{-1}$ **(Im/Re)** based on an LNS-reformulated version of the Taylor series expansion of the function. It has been seen that for 10-bit width fixed-point implementations, the first three terms of the series provide a sufficiently accurate approximation of the arctangent function for use in a phase-locked deep brain stimulation application. If further accuracy is required for a particular application, it is possible according to another embodiment, to increase the number of Taylor series terms which are retained by adding extra adders and an antilogarithm, module. The Taylor series equation used is efficiently implemented in hardware using the LNS that transforms division into subtraction and exponential operations into shift operations and additions. The detailed circuit-level implementation for the proposed log-domain Taylor series phase extractor (LTPE), is shown in Figure 7. In a preferred embodiment, as mentioned above, the binary logarithmic versions of the real and imaginary components of the oscillatory signal as well as the encoded signums of the real and imaginary components, used as control inputs for the programmable logarithmic arithmetic units, are provided at inputs of the phase extractor **700**. A log generator and a signum generator and encoder may be placed somewhere on the system-on-chip so that the log values and encoded signum values may be routed around the chip for use in any of the blocks where they may be required.

The Taylor series expansion of the arctangent function can be reformulated to give the following three functions, depending on whether the imaginary component of the signal divided by the real component of the signal lies between -1 and +1, whether it is greater than 1 or whether it is less than -1:

$$(1/\pi) \times \tan^{-1}(Im/Re) = 0 - (- (sgn(Im) \times sgn(Re)) \times 2^{((\log_2 (|Im|) - \log_2 (|Re|)) - \log_2 (\pi))} + (sgn(Im) \times sgn(Re)) \times 2^{(3 \times (\log_2 (|Im|) - \log_2 (|Re|)) - (\log_2 (|\pi| + \log_2 (3))))}, \text{ for } -1 \leq Im/Re \leq 1;$$

$$(1/\pi) \times \tan^{-1}(Im/Re) = 1/2 - ((sgn(Im) \times sgn(Re)) \times 2^{(- (\log_2 (|Im|) - \log_2 (|Re|)) - \log_2 (|\pi|))} - (sgn(Im) \times sgn(Re)) \times 2^{(-3 \times (\log_2 (|Im|) - \log_2 (|Re|)) - (\log_2 (|\pi|) + \log_2 (3)))}, \text{ for } Im/Re > 1; \text{ or}$$

$$(1/\pi) \times \tan^{-1}(Im/Re) = -1/2 - (- (sgn(Im) \times sgn(Re)) \times 2^{(- (\log_2(|Im|) - \log_2(|Re|)) - \log_2 (|\pi|))} + (sgn(Im) \times sgn(Re)) \times 2^{(-3x (\log_2 (|Im|) - \log_2 (|Re|)) - (\log_2(\pi) + \log_2(3)))}, \text{ for } Im/Re < -1.$$

The first three terms of the Taylor expansion of the arctangent function therefore include a constant term **const,** a linear term **linear** and a cubic term **cubic.**

It is worth noting that Im/Re is between -1 and 1 whenever Im is less than Re, regardless of the signs (signums or polarities) of Im and Re. It is also worth noting that Im/Re is greater than 1 whenever Im is greater than Re and both signals have the same sign. Finally it is worth noting that Im/Re is less than -1 whenever Im is greater than Re but both signals have opposite signs.

A set of comparators, appropriately configured in a comparator network **710** may be provided in the phase extractor in order to identify the three cases, as shown in figure 7.

The constant term **const,** is: 0 for Im/Re lying between -1 and 1; ½ for Im/Re greater than 1; and -1/2 for Im/Re>=1, and so can be readily deduced from the real and imaginary components of the oscillatory signals which are received from the bandpass filter. This may be done using the comparator network **710** and a multiplexer **750,** as illustrated in figure 7. The multiplexer **750** may be configured to select either the value 0 or the value 0.5 to use in generating the constant term **const,** depending on whether or not the imaginary component is less than or equal to the real component.

The linear term **linear** can be derived very simply, based on the real and imaginary components of the oscillatory signals, and using the hardware programmable logarithmic arithmetic unit according to an embodiment of the present invention, programmed to multiply a first two operands and divide by a third operand, thus providing a linear term hardware programmable logarithmic arithmetic unit **lauL.** As shown in figure 7, using the comparator network **710** in combination with a two's compliment generator **720** and a pair of multiplexers **730, 740,** a selection between the values of the binary logarithms of the real and imaginary components or the 2's compliment of the binary logarithms of the real and imaginary values may be made depending on the output of the comparator network **710.** It is thus possible, depending on whether the imaginary component of the signal divided by the real component of the signal lies between -1 and +1, whether it is greater than 1 or whether it is less than -1, to provide the appropriate signals to the inputs of the linear term logarithmic arithmetic unit **lauL,** such that the appropriate linear term of the Taylor Series expansion will be output from the linear term logarithmic arithmetic unit. The constant value, $\log2(\pi)$, can simply be hardwired to the third operand input port of the cell or it may be provided at the third operant input port of the linear term logarithmic arithmetic unit **lauL** from an appropriately preloaded memory. The encoded signum values of the real and imaginary components, respectively, are connected to the first control input port of the linear term logarithmic arithmetic unit **lauL.**

The cubic term **cubic** may also be derived using a programmable logarithmic arithmetic unit according to an embodiment of the invention, configured as a cubic term logarithmic arithmetic unit **lauC.** As shown in figure 7, using the comparator network **710** in combination with the two's compliment generator **720** and the pair of multiplexers **730, 740,** a selection between the values of the binary logarithms of the real and imaginary components or the 2's compliment of the binary logarithms of the real and imaginary values may be made depending on the output of the comparator network **710.** It is thus possible, depending on whether the imaginary component of the signal divided by the real component of the signal lies between -1 and +1, whether it is greater than 1 or whether it is less than -1, to provide the appropriate signals to the inputs of the cubic term logarithmic arithmetic unit **lauC,** such that the appropriate cubic term of the Taylor Series expansion will be output from the cubic term logarithmic arithmetic unit. As shown in figure 7, the first and second operand inputs of the cubic logarithmic arithmetic unit have each first had a one-position bitwise left shift performed on them (752, 756), to get the value of the corresponding input-squared, to which the non-shifted value is then added (754, 758) to the shifted value to get the value of the corresponding input-cubed. This may be done on both of the operand inputs to get the $3\times(\log_2(|Im|) - \log_2(|Re|))$ expression, where the unit is programmed to perform division of the cube of the first operand by the cube of the second operand. Again, the constant expression $\log_2(\pi)+\log_2(3)$ may be applied to the third operand input port either from a memory or by hardwiring the port pins to the appropriate power rails. As shown in figure 7, the encoded signum values of the real and imaginary components, respectively, may be connected to the first control input port of the cubic term logarithmic arithmetic unit **lauC.**

The arctangent function may be found by adding/subtracting the constant, linear and cubic terms as appropriate, as shown in figure 7, using adders/subtractors **760 and 775,** and then using the comparator network **710,** depending on whether the imaginary component of the signal divided by the real component of the signal lies between -1 and +1, whether it is greater than 1 or whether it is less than -1, either the result of said add/subtract function or its complement may be provided as the result of the approximation of the arctangent function.

As illustrated in figure 7, a quadrant decoder may be used to determine in which quadrant the signal lies. The quadrant decoder may be realised using a four-input multiplexer controlled by a two-bit signal comprising the least significant bits of the encoded signums of the real and imaginary components of the oscillatory signal. The phase is given by the output of the quadrant decoder. For the first and fourth quadrants, the phase is equal to the value of the arctangent, approximated as described above. For the second quadrant, the phase is equal to the arctangent value plus 1 and for the third quadrant, the phase is equal to the arctangent value minus 1.

By reformulating the Taylor series expansion approximation of the arctangent function as described above, a sufficiently high level of accuracy can be maintained, while greatly simplifying the hardware required to realise the function. Instead of requiring multiplication and cubic function hardware, the linear term can now use just adder/subtractors in the logarithmic domain, and the cubic term just needs a shift and add/subtract function in the logarithmic domain. The proposed logarithmic arithmetic unit greatly simplifies the hardware realisation of the reformulated function. If even more accuracy were required, then according to another embodiment, the hardware may be adapted to take account of more terms of the Taylor series expansion using the same principles.

The reformulation of the arctangent function, as described above, results in a normalised phase which has a value which falls between -1 and +1. According to another embodiment, it is also possible to arrange for the logarithmic arithmetic unit in such a configuration to provide a result of a reformulation of the Taylor series expansion approximation without such normalisation. In this case, a circuit is proposed for approximating a result of the expression arctangent(Im/Re) as defined by one of the three following functions, depending on whether the imaginary component of the signal divided by the real component of the signal lies between -1 and +1, whether it is greater than 1 or whether it is less than -1:

$\tan^{-1}$(Im/Re) = 0 - (- (sgn(Im) × sgn(Re)) × $2^{(\log_2(|Im|) - \log_2(|Re|))}$ + (sgn(Im) × sgn(Re)) × $2^{(3 \times (\log_2(|Im|) - \log_2(|Re|)) - \log_2(3))}$), for -1 <- Im/Re <= 1;

$\tan^{-1}$(Im/Re) = π/2 - ((sgn(Im) × sgn(Re)) × $2^{(\log_2(|Im|) - \log_2(|Re|))}$ + (sgn(Im) × sgn(Re)) × $2^{(-3 \times (\log_2(|Im|) - \log_2(|Re|)) - \log_2(3))}$), for Im/Re > 1; or

$\tan^{-1}$(Im/Re) = -π/2 - (- (sgn(Im) × sgn(Re)) × $2^{(- (\log_2(|Im|) - \log_2(|Re|)))}$ + (sgn(Im) × sgn(Re)) × $2^{(-3 \times (\log_2(|Im|) - \log_2(|Re|)) - \log_2(3))}$), for Im/Re <- 1.

In this embodiment, the linear term is 0 for Im/Re lying between -1 and 1; π/2 for Im/Re greater than 1; and - π/2 for Im/Re>=1. The linear term can be derived very simply, based on the real and imaginary components of the oscillatory signals, and using the hardware programmable logarithmic arithmetic unit according to an embodiment of the present invention, programmed to multiply a first two operands. The cubic term may also be derived using a programmable logarithmic arithmetic unit according to an embodiment of the invention, where the first and second operand inputs have first had a one-position bitwise left shift performed, to get the input-squared, then adding the non-shifted value to the shifted value to get the input-cubed. This may be done on both of the operand inputs to get the 3× ($\log_2$ (|Im|)- $\log_2$ (|Re|)) expression where the unit is programmed to perform division of the cube of the first operand by the cube of the second operand. The constant expression $\log_2(3)$ can be applied to the third operand input port either from a memory or by hardwiring the port pins to the appropriate power rails. In this case, the quadrant decoder is configured to add a value of π when the second quadrant is decoded using the LSBs of the encoded signums of the real and imaginary components of the oscillatory signal, and to subtract a value of π when the third quadrant is detected. The phase is equal to the value generated as the arctangent approximation when the first or fourth quadrants are decoded.

According to yet another aspect, programmable logarithmic arithmetic units according to an embodiment of the present invention, made using a combinatorial logic cell, may be deployed in a sequential logic circuit for extracting phase locking value and/or phase-amplitude coupling information from the neural oscillatory signals, both of which are very useful features for quantifying oscillatory synchronisation. The phase locking value (PLV) assesses the phase synchronisation between two intra-band neural signals S1 and S2 using the formula:

$$PLV = \frac{1}{N} \sqrt{\left( \sum_{i=1}^{N} \sin(\theta_{1,i} - \theta_{2,i}) \right)^2 + \left( \sum_{i=1}^{N} \cos(\theta_{1,i} - \theta_{2,i}) \right)^2}$$

where, for a being the real component of the oscillatory signal and b being the imaginary component of the oscillatory signal, $\theta_{1,i} = \arctan\left(\frac{b_{1,i}}{a_{1,i}}\right)$ and $\theta_{2,i} = \arctan\left(\frac{b_{2,i}}{a_{2,i}}\right)$ represent the instantaneous phases of S1 and S2 at the ith sample. PAC, a cross-frequency feature, measures how the phase of a low-frequency oscillation modulates the amplitude of a high-frequency oscillation. PAC is typically computed as:

$$PAC = \frac{1}{N} \sqrt{\left( \sum_{i=1}^{N} A_{m,i} \sin(\theta_{P,i}) \right)^2 + \left( \sum_{i=1}^{N} A_{m,i} \cos(\theta_{P,i}) \right)^2}$$

where, for a being the real component of the oscillatory signal and b being the imaginary component of the oscillatory signal, $\theta_{p,i} = \arctan\left(\frac{b_{p,i}}{a_{p,i}}\right)$ is the instantaneous phase of the low-frequency modulating signal, and $A_{m,i}$ is the instantaneous magnitude of the high-frequency modulated signal at the ith sample . Calculating PAC and PLV involves determining phase or phase difference, amplitude, and subsequent sine and cosine computations. To enable low-complexity on-chip extraction of PAC and PLV, we propose a reformulation for the extraction of trigonometric components of the above equation directly from Im, Re and amplitude without involving phase extraction, as given in equations:

$$A_{m,i}\sin\left(\arctan\left(\frac{b_{p,i}}{a_{p,i}}\right)\right) = A_{m,i}\frac{b_{p,i}}{A_{p,i}}$$

$$\sin\left(\arctan\left(\frac{b_{1,i}}{a_{1,i}}\right) - \arctan\left(\frac{b_{2,i}}{a_{2,i}}\right)\right) = \frac{b_{1,i}a_{2,i}}{A_{1,i}A_{2,i}} - \frac{a_{1,i}b_{2,i}}{A_{1,i}A_{2,i}}$$

$$A_{m,i}\cos\left(\arctan\left(\frac{b_{p,i}}{a_{p,i}}\right)\right) = A_{m,i}\frac{a_{p,i}}{A_{p,i}}$$

$$\cos\left(\arctan\left(\frac{b_{1,i}}{a_{1,i}}\right) - \arctan\left(\frac{b_{2,i}}{a_{2,i}}\right)\right) = \frac{b_{1,i}b_{2,i}}{A_{1,i}A_{2,i}} - \frac{a_{1,i}a_{2,i}}{A_{1,i}A_{2,i}}$$

where $A_{p,i} = \sqrt[2]{a_{p,i}^2 + b_{p,i}^2}$, $A_{m,i} = \sqrt[2]{a_{m,i}^2 + b_{m,i}^2}$, $A_{1,i} = \sqrt[2]{a_{1,i}^2 + b_{1,i}^2}$ and

$A_{2,i} = \sqrt[2]{a_{2,i}^2 + b_{2,i}^2}$ represent: the amplitude extracted for low-frequency modulating signal ($A_{p,i}$); the high-frequency modulated signal ($A_{m,i}$); and the two intra-band neural signals, S1 and S2, respectively.

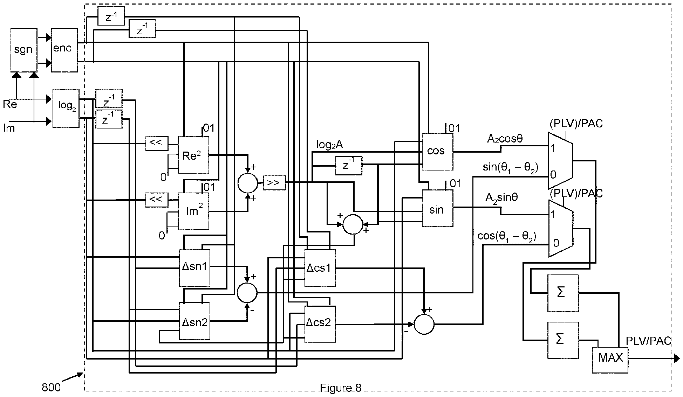

PAC/PLV may be computed by accumulating the trigonometric components followed by approximation using L-infinity norm for very low drop in accuracy as shown. Figure 8 illustrates a circuit featuring LAUs **Re$^2$** and **Im$^2$** for extracting amplitude, **cos** and **sin** for extracting cosine and sine values, Δ**sn1**, Δ**sn2** for extracting differences in cosine values for intra-band signals and Δ**cs1**, Δ**cs2** for extracting differences in cosine values for intra-band signals. The circuit further features delay elements for isolating successive samples of the signal, multiplexers for selecting whether to output PLV or PAC, accumulators to accumulate the results over a predetermined sample window, and a circuit for performing an approximation using L-infinity norm. The significant advantage of this PAC and PLV implementation is its high accuracy with reduced hardware requirements compared to previous implementations. In figure 8, use is made of the value $\log_2$ (amplitude). In embodiments where the value of amplitude is required in the non-logarithmic domain, it is possible to include a further LAU to take the value $\log_2$(amplitude) at one data input port and the value 0 on the remaining data input ports, with the control input port receiving the values {0, sgn(Re,[0])} and {0, sgn(Im[0]} as its most significant bits and least significant bits, respectively. The output from this further LAU will then express the value of the amplitude of the oscillatory signal.

**Claims**

1. A programmable combinatorial logic cell for performing a predetermined cell function on a plurality of data input values, the logic cell having:

   a first digital data input port for receiving a first data input value derivable from a first operand;
   one or more further digital data input ports for receiving one or more further data input values each derivable from one or more further operands; and
   a digital output port;
   the cell being configured to:

   generate an exponent value by performing a combination of additions and/or subtractions between each from the plurality of data input values using a programmable adder/subtractor, said combination depending on said predetermined cell function; and
   generate an antilog value using an antilog converter, the antilog value being substantially equal to the binary antilog of the exponent value;

**characterised in that** the logic cell further comprises:

a first digital control input port for receiving a digital command of a first type, within which command is encoded at least one correction instruction from a predetermined set of correction instructions including a reset instruction and an invert instruction and;

a decoder configured to decode said correction instruction from the encoded command of the first type;

the logic cell being further configured, depending on the decoded correction instruction, to:

reset the output port of the logic cell by forcing a value of zero at said output port should said correction instruction be the reset instruction; or

provide a 2's complement of said antilog value at said output port should said correction instruction be the invert instruction; or

otherwise, provide said antilog value at said output port;

the value at the output port thereby satisfying one of the expressions:

output value = $2^{\wedge}(+/-value\_port1... +/-value\_portp)$, when the encoded command comprises neither an invert instruction nor a reset instruction, where said additions/subtractions depend on the combination of additions and/or subtractions performed by said programmable adder/subtractor; or

output value = $(-1) \times (2^{\wedge}(+/-value\_port1... +/-value\_portp))$, when the encoded command comprises an invert instruction without a reset instruction, where said additions/subtractions depend on the combination of additions and/or subtractions performed by said programmable adder/subtractor; or

output value = 0 when the command comprises a reset instruction;

where the number of data input ports in the plurality of data input ports is p and value_portn signifies the data input value at the $n^{th}$ data input port.

2. The cell according to claim 1, wherein said first control input port comprises a number of control lines which is: at least equal to twice the number of cell data input ports for variable inputs; or at most equal to twice the number of cell data input ports, wherein 2 lines each from the number of control lines of the first control input port correspond to one each of the cell data input ports, the 2 lines representing a most significant bit and a least significant bit of a respective control line pair, {MSBportn, LSBportn}, whose value is used to indicate whether the value at its respective data input port is derived from a corresponding operand having:

a value of zero, whereupon the corresponding control line pair is encoded to have a value of {0,0};

a positive value, whereupon the corresponding control line pair is encoded to have a value of {0,1}; or

a negative value, whereupon the corresponding control line pair is encoded to have a value of {1,1};

the value at the output port thereby being overridable to satisfy the expression:

output value = $(sgn(\text{first operand}) \times ... sgn(p^{th} \text{operand})) \times 2^{\wedge}(+/- value\_port1... +/-value\_portp)$, where sgn(signal) is a signum function having a value of either 0, +1 or -1 depending on whether the signal has a zero value, a positive value or a negative value, respectively.

3. The cell according to claim 2, wherein:

said decoder is configured to decode:

a reset instruction if any of the least significant bits of any of the control line pairs of the first control input port has a value of 0; or

an invert instruction if one and only one of the most significant bits from all of the control line pairs of the first control input port has a value of 1;

the decoder comprising:

a first multiplexer in combination with a 2's compliment logic block configured to generate a 2's compliment of said antilog value, the combination being configured to provide said antilog value at an output of the first multiplexer if the invert instruction is not decoded or to provide said 2's compliment of the antilog value at the output of the first multiplexer if the invert instruction is decoded;

a second multiplexer configured to reset the output of the cell to a value of zero if the reset instruction is decoded or to present whatever value is present at the output of the first multiplexer at the output port of the cell if said invert instruction is not decoded;

an exclusive-OR gate whose inputs are the control lines from the first control input port which correspond to all of the most significant bits of all of the data input ports and whose output is used to control the first multiplexer; and

a NAND gate whose inputs are the control lines from the first control input port which correspond to all of the least significant bits of all of the data input ports and whose output is used to control the second multiplexer.

4. The cell according to either of claims 2 or 3, further comprising a conditioning circuit configured to receive the data input values from one or more of the data input ports and to perform a conditioning function on said data input values, on a data input port-by-data input port basis, before performing said combination of additions and/or subtractions, said conditioning function being one which is selected from:

a multiplication by a predetermined integer value, m; and
a division by a predetermined integer value, m;
wherein the value at the output port of the cell is: (sgn(first operand) $\times$ ... sgn($p^{th}$ operand)) $\times$ 2^(+/-(value_port1 $\times$ m)... +/-(value_portp $\times$ m)) or (sgn(first operand) $\times$ ...sgn($p^{th}$ operand)) $\times$ 2^(+/-(value_port1/m)... +/-(value_portp/m)), depending on which conditioning function is selected.

5. The cell according to claim 4, wherein the conditioning circuit is a programmable conditioning circuit comprising:

a conditioning shift register, programmable to perform either:

a shift left by s positions on its corresponding data input value when the selected conditioning function is a multiplication by an integer, m, where m is equal to $2^s$; or
an arithmetic shift right by s positions on its corresponding data input value when said conditioning function is a division by an integer, m, where m is equal to $2^s$;
wherein the value at the output port of the cell is: (sgn(first operand) $\times$ ...sgn($p^{th}$ operand)) $\times$ 2^((+/-value_port1 $\times$ m) ...+/- (value_portp $\times$ m)) or (sgn(first operand) $\times$ ...sgn($p^{th}$ operand)) $\times$ 2^((+/-value_port1/m) ...+/- (value_portp/m)), depending on which conditioning function is selected; or

a combination of: one or more conditioning shift registers per data input port, connected in parallel at their inputs; and one or more conditioning adders/subtractors, configured to combine the value of the code at the data input port which is common to the inputs of the conditioning shift registers by addition and/or subtraction of the respective outputs of the conditioning shift registers when said conditioning function is a multiplication by an integer, d, or a division by an integer, d, where d is either greater than or less than $2^s$, said combination being programmable to perform shift left or shift right and/or addition/subtraction operations as appropriate to provide a multiply or divide by d function;
wherein the value at the output port of the cell is: (sgn(first operand) $\times$ ... sgn($p^{th}$ operand)) $\times$ 2^((+/-value_port1 $\times$ d) ...+/-(value_portp $\times$ d)) or (sgn(first operand) $\times$ ...sgn($p^{th}$ operand)) $\times$ 2^((+/-value_port1/d) ... +/-(value_portp/d)), depending on which conditioning function is selected.

6. A method for programming the cell according to either of claims 2 or 3 for use as a programmable arithmetic unit for performing a predetermined arithmetic function on a plurality of operands, an operand being either a physical operand having a value encoded over a plurality of predetermined digital signals within an electronic circuit within which the cell is placed or a virtual operand having a predetermined value, said arithmetic function being a multiplication and/or division function, the method comprising:

transforming each physical operand value to a value substantially equal to the binary logarithm of the respective physical operand value and providing said transformed physical operand value at a corresponding data input port of the cell;
transforming each virtual operand value to a value substantially equal to the binary logarithm of the predetermined value of the virtual operand and providing said transformed virtual operand at a corresponding data input port of the cell, either by hardwiring a corresponding transformed operand code at the respective data input port of the cell or by reading the transformed operand code at the respective data input port of the cell from a memory;
deriving a signum value for each of the operands, the signum value being 0, +1 or -1 depending on whether the operand has a zero value, a positive value or a negative value, respectively;
encoding the signum values of each of the operands over a respective control line pair from the control input port, said encoding providing a value of 00 for a signum of 0, 01 for a signum of +1 or 11 for a signum value of -1;

programming the cell function by programming the adder/subtractor of the cell such that cell data input values derived from operands which appear as multipliers in the predetermined module function are added at the adder/subtractor and operands which appear as divisors in the predetermined module function are subtracted at the adder/subtractor;

the value at the output port of the cell thereby satisfying the expression:
output value=(sgn(op1) $\times$ sgn(op2)... $\times$ sgn(opn)) $\times$ 2^((+/-log2|op1|)+/- (log$_2$|op2|)... +/-(log$_2$|opn|)), where op1, op2, opn are the values of respective operands, and sgn(x) is the signum value of x.

7. A method for programming the cell according to either of claims 2 or 3 for use as a programmable arithmetic unit for performing an arithmetic function on at least a first operand, an operand being either a physical operand having a value encoded over a plurality of predetermined digital signals within an electronic circuit within which the cell is placed or a virtual operand having a predetermined value, said arithmetic function being an exponentiation of the operand value by a power value, the power value having a numerator and a denominator, said method comprising transforming the first operand value to a value substantially equal to the binary logarithm of the first operand value; then:

if the numerator of the power value has a value of $2^x$, where x is either 0 or a positive integer:
performing an x-position left shift on the transformed first operand value, thereby multiplying the transformed first operand value by $2^\times$; or
if the numerator of the power value has a value which is greater than $2^x$, where x is either 0 or a positive integer:

performing an x-position left shift on the transformed first operand value; and
adding the transformed first operand value to the thus shifted transformed first operand value a number of times equal to the value of the numerator of the power value minus $2^x$, thereby multiplying the transformed first operand value by the numerator of the power value; or

if the numerator of the power value has a value which is less than $2^x$, where x is either 0 or a positive integer:

performing an x-position left shift on the transformed first operand value; and
subtracting the transformed first operand value from the thus shifted transformed first operand value a number of times equal to $2^x$ minus the numerator of the power value, thereby multiplying the transformed first operand value by the numerator of the power value; and/or

if the denominator of the power value has a value of $2^x$, where x is either 0 or a positive integer:
performing an x-position arithmetic right shift on the transformed first operand value, thereby dividing the transformed first operand value by $2^\times$; and/or
if the denominator of the power value has a value which is greater than $2^x$, where x is either 0 or a positive integer:

performing an x-position arithmetic right shift on the transformed first operand value; and
subtracting the transformed first operand value from the thus shifted transformed first operand value a number of times equal to the value of the denominator of the power value minus $2^x$, thereby dividing the transformed first operand value by the denominator of the power value; and/or

if the denominator of the power value has a value which is less than $2^x$, where x is either 0 or a positive integer:

performing an x-position left shift on the transformed first operand value; and
adding the transformed first operand value to the thus shifted transformed first operand value a number of times equal to $2^x$ minus the value of the denominator of the power value, thereby dividing the transformed first operand value by the denominator of the power value;

using the programmable adder/subtractor of the cell to perform the predetermined cell function on the thus shifted or shifted and added values;
deriving a signum code for said first operand, the signum code being 00, 01 or 11 depending on whether the first operand has a value of zero, a value which is positive or a value which is negative; and
providing said signum code as a first control line pair at the control input port of the cell and providing values of 01 as control line pairs of the control input port for any remaining data input ports of the cell which are unused.

8. A method for extracting a spectral power of an oscillatory signal using digital electronic hardware, the method comprising:

providing a cell according to either of claims 2 or 3, configured to perform an exponentiation function according to the method of claim 7 using the oscillatory signal as an operand, wherein said power value is 2;

providing a sequential accumulator clocked at a predetermined sample clock frequency to accumulate a plurality of samples of the output of the cell over a sample window comprising a predetermined number of periods of the sample clock.

9. A method, using digital electronic hardware, for extracting the amplitude of an oscillatory signal having a real component and an imaginary component as represented on an Argand plane for the representation of complex numbers, the amplitude being determined by calculating the square root of the sum of the squares of the real and imaginary components of the oscillatory signal, the method comprising:

providing a first cell according to either of claims 2 or 3 and programming the first cell, according to the method of claim 7, to perform an exponentiation function using the real component of the oscillatory signal as its operand, wherein said power value is 2;

providing a second cell according to either of claims 2 or 3 and programming the second cell, according to the method of claim 7, to perform an exponentiation function using the imaginary component of the oscillatory signal as its operand, wherein said power value is 2;

providing an adder configured to add the data output values from the first and second cells to produce a sum value;

providing a logarithmic converter configured to receive the sum value and convert it to a square-log-amplitude value which is substantially equal to the binary logarithm of the sum value;

providing an amplitude shift register configured to receive the square-log-amplitude value and perform an arithmetic one-position right shift function of the square-log-amplitude value to provide a log-amplitude value representing the binary logarithmic value of the amplitude of the oscillatory signal.

10. The method according to claim 9, comprising a further step to transform the logarithmic value of the amplitude of the oscillatory signal out of the log domain to provide the amplitude of the oscillatory signal, the method further comprising:

providing a third cell according to either of claims 2 or 3 and programming the third cell, according to the method of claim 6, to perform a multiplication of the logarithmic value of the amplitude of the oscillatory signal by a value of 1; and

providing:

a value of 0 as the most significant bit of the control line pair of the control input port of the third cell corresponding to the first data input port of the third cell;

the least significant bit of the signum of the real component of the oscillatory signal as the least significant bit of the control line pair of the control input port of the third cell corresponding to the first data input port of the third cell;

a value of 01 as the most significant bit of the control line pair of the control input port of the third cell corresponding to the second data input port of the third cell; and

the least significant bit of the signum of the imaginary component of the oscillatory signal as the least significant bit of the control line pair of the control input port corresponding to the second data input port of the third cell.

11. A method for approximating a result of an expression $(1/\pi) \times$ arctangent(Im/Re), where Im and Re are the real and imaginary components of an oscillatory signal as represented on an Argand plane for the representation of complex numbers, said result being generated using digital electronics hardware configured to provide said approximation by extracting the first three terms of the Taylor series expansion of the expression, where said first three terms are reformulated as a set of log domain equations, the first three terms being a constant term, a linear term and a cubic term, each term having potentially different values depending on whether Im/Re complies with:

a first condition where Im/Re lies between -1 and 1, inclusive, wherein the log domain transformation of said first three terms is: $0 - (-(\text{sgn(Im)} \times \text{sgn(Re)}) \times 2^{((\log_2(|Im|) - \log_2(|Re|)) - \log_2(\pi))} + (\text{sgn(Im)} \times \text{sgn(Re)}) \times 2^{(3 \times (\log_2(|Im|) - \log_2(|Re|)) - (\log_2(\pi) + \log_2(3))))}$; or

a second condition where (Im/Re) > 1, wherein the log domain transformation of said first three terms is: $\frac{1}{2} - ((\text{sgn(Im)} \times \text{sgn(Re)}) \times 2^{(-(\log_2(|Im|) - \log_2(|Re|)) - \log_2(\pi))} - (\text{sgn(Im)} \times \text{sgn(Re)}) \times 2^{(-3 \times (\log_2(|Im|) - \log_2(|Re|)) - (\log_2(\pi) + \log_2(3))))}$; or

a third condition where (Im/Re) <-1, wherein the log domain transformation of said first three terms is: $-\frac{1}{2}$ - (-(sgn(Im) $\times$ sgn(Re)) $\times$ 2^(-(log$_2$ (|Im|)- log$_2$ (|Re|)) - log$_2$($\pi$))+ (sgn(Im) $\times$ sgn(Re)) $\times$ 2^(-3 $\times$ (log$_2$ (|Im|)- log$_2$ (|Re|)) - (log$_2$($\pi$)+ log$_2$(3))));

the method comprising:

providing binary logarithmic conversions of the real and imaginary components of the oscillatory signal using a binary log converter, the binary logarithmic conversions of the real and imaginary components being substantially equal to, respectively, log$_2$(Re) and log$_2$(Im);

providing signum values for the real and imaginary components of the oscillatory signal and encoding said signum values to provide signum codes for the real and imaginary components of the oscillatory signal, said signum codes being 00 when the corresponding signum value of 0, 01 when the corresponding signum value is +1 and 11 when the corresponding signum value is -1;

providing a comparator circuit to provide:

a value of zero as the value of the constant term when the oscillatory signal meets the first condition whereupon the comparator circuit also provides a first data output having a value equal to the binary logarithmic conversion of the real component of the oscillatory signal, as well as a second data output having a value equal to the binary logarithmic conversion of the imaginary component of the oscillatory signal;

an assertion of a flag when either of the second or third conditions are met whereupon it also provides a value of $\frac{1}{2}$ as the value of the constant term where the first data output has a value equal to the two's complement of the binary logarithmic conversion of the real component of the oscillatory signal and the second data output has a value equal to the 2's complement of the binary logarithmic conversion of the imaginary component of the oscillatory signal;

providing a first cell according to either of claims 2 or 3, the first cell being configured to receive the first and second data outputs from the comparator circuit at its first and second data input ports, the third data input port of the first cell being either hardwired to a value of log$_2$($\pi$) or being provided with a value of log$_2$($\pi$) from a memory; the remaining data input ports of the first cell being either hardwired to provide a value of zero or being provided with a value of zero from a memory; wherein:

the control line pair of the control input port of the first cell corresponding to the first data input port receiving the signum code of the real component of the oscillatory signal; the control line pair of the control input port of the first cell corresponding to the second data input port receiving the signum code of the imaginary component of the oscillatory signal;

said first cell providing the linear term at its output port;

providing a second cell according to either of claims 2 or 3, programmed according to the method of claim 7, to perform an exponentiation of first data output of the comparator circuit and an exponentiation of the second data output of the comparator circuit, where the power value is 3, and further programmed, according to the method of claim 6, to perform a multiplication of the thus exponentiated first and second data outputs of the comparator circuit, the third data input port of the second cell being either hardwired to a value of log$_2$($\pi$)+log$_2$(3) or being provided with a value of log$_2$($\pi$)+log$_2$(3) from a memory; the remaining data input ports of the second cell being either hardwired to provide a value of zero or being provided with a value of zero from a memory; wherein:

the control line pair of the control input port of the second cell corresponding to the first data input port receiving the signum code of the real component of the oscillatory signal; the control line pair of the control input port of the second cell corresponding to the second data input port receiving the signum code of the imaginary component of the oscillatory signal;

said second cell providing the cubic term at its output port;

providing a term assembler to provide a pre-arctangent value by subtracting the linear term and the cubic term from the constant term; and

the result of the expression either being equal to the pre-arctangent value if said flag is asserted or being equal to the 2's complement of said pre-arctangent value if said flag is not asserted.

12. The method according to claim 11, adapted to allow for the extraction of a normalised instantaneous phase of the oscillatory signal based on its real and imaginary components, Re and Im, the normalized instantaneous phase having a value of between -1 and +1, the method further comprising:

receiving the result of the expression at a first input and at a fourth input of a phase multiplexer;

receiving a value of the result plus 1 at a second input of the phase multiplexer;

receiving a value of the result minus 1 at a third input of the phase multiplexer;

controlling the phase multiplexer using a control signal pair comprising the LSB of the signum of the real component of the oscillatory signal and the LSB of the signum of the imaginary component of the oscillatory signal to select either the first, second, third or fourth input of the phase multiplexer if the control signal pair has a value of 00, 01, 10 or 11, respectively.

13. A method, using digital electronics hardware, for extracting a phase-amplitude coupling value (PAC) from real and imaginary components of an oscillatory signal as represented on an Argand plane for the representation of complex numbers, said PAC being based on the function:

$$\frac{1}{N}\sqrt{\left(\sum_{i=1}^{N} A_{m,i}\sin\left(\theta_{P,i}\right)\right)^2 + \left(\sum_{i=1}^{N} A_{m,i}\cos\left(\theta_{P,i}\right)\right)^2}$$

, where, for a being the real component of the oscillatory signal and b being the imaginary component of the oscillatory signal, $\theta_{p,i} = \arctan\left(\frac{b_{p,i}}{a_{p,i}}\right)$ is the instantaneous phase of a low-frequency modulating signal, and $A_{m,i}$ is the instantaneous magnitude of a high-frequency modulated signal at the $i^{th}$ sample;

wherein the sine and cosine terms of the function are reformulated to provide the log domain expressions:

$$A_{m,i}\sin\left(\arctan\left(\frac{b_{p,i}}{a_{p,i}}\right)\right) = A_{m,i}\frac{b_{p,i}}{A_{p,i}}$$

and

$$A_{m,i}\cos\left(\arctan\left(\frac{b_{p,i}}{a_{p,i}}\right)\right) = A_{m,i}\frac{a_{p,i}}{A_{p,i}}$$

the method comprising:

providing binary logarithmic conversions of the real and imaginary components of the oscillatory signal;

providing signum values of the real and imaginary components of the oscillatory signal and encoding said signum values using a signum encoder, said signum encoder having an input each for the signum values of the real and imaginary components and providing corresponding signum codes of 00, 01 or 11 at respective outputs when their corresponding inputs have a value of 0, 1, or -1, respectively;

performing amplitude extraction of the oscillator signal according to the method of either of claims 9 or 10 to provide an amplitude signal having a value substantially equal to the binary logarithm of the amplitude of the oscillatory signal;

providing sequential circuitry including a delay element to receive the signal having the value of the binary logarithm of the amplitude of the oscillatory signal and to provide a delayed version of said amplitude signal;

providing an adder/subtractor circuit to add the signal of the binary logarithm of the amplitude of the oscillatory signal to the delayed version of said amplitude signal to provide a signal whose value is the sum of said amplitude signals;

providing a first cell according to either of claims 2 or 3, programmed according to the method of claim 6 such that its cell function is to provide a sum of its first and second data input port values minus its third data input port value, said first data input port receiving the binary logarithm of the absolute value of the real component of the oscillatory signal, said second data input port receiving the binary logarithm of the amplitude of the oscillatory signal, the third data input port receiving the delayed version of the binary logarithm of the amplitude of the oscillatory signal, the remaining data input ports having fixed values of 0, the first cell having access to the signum code of the real component of the oscillatory signal for use as a control port input pair relative to the first cell's first data input port, the control port input pair corresponding to the first cell's second data input port being connected to 01; the first cell thus producing a first phase signal;

providing a second cell according to either of claims 2 or 3, programmed according to the method of claim 6 such that its cell function is to provide a sum of its first and second data input port values minus its third data input port value, said first data input port being connected to the first data output port of the comparator, said second data input port being connected to the second data output port of the comparator, the third data input port receiving the delayed version of the binary logarithm of the amplitude of the oscillatory signal, the remaining data input ports having fixed values of 0; the second cell having access to the signum code of the imaginary component of the oscillatory signal for use as a control port input pair relative to the second cell's first data input port, the control port input pair corresponding to the second data input port being connected to 01; the second cell thus producing a second phase signal;

providing a first accumulator, configured to accumulate a plurality of first phase signal values over a predetermined sample window;

providing a second accumulator, configured to accumulate a plurality of second phase signal values over the predetermined sample window; and

providing a selector to select the maximum value between the accumulated first phase signal values and the accumulated second phase signal values, thereby providing the phase-amplitude coupling value.

14. A method, using digital electronics hardware, for extracting a phase locking value (PLV) from real and imaginary components of an oscillatory signal as represented on an Argand plane for the representation of complex numbers, said PLV for assessing a phase synchronisation between two intra-band signals of the oscillatory signal, S1 and S2, and being calculated based on the function:

$$ PLV = \frac{1}{N} \sqrt{\left(\sum_{i=1}^{N} \sin\left(\theta_{1,i} - \theta_{2,i}\right)\right)^2 + \left(\sum_{i=1}^{N} \cos\left(\theta_{1,i} - \theta_{2,i}\right)\right)^2} \quad , $$

where, for a being the real component of the oscillatory signal and b being the imaginary component of the oscillatory signal, $\theta_{1,i} = \arctan\left(\frac{b_{1,i}}{a_{1,i}}\right)$ and $\theta_{2,i} = \arctan\left(\frac{b_{2,i}}{a_{12i}}\right)$ represent instantaneous phases of S1 and S2 at the $i^{th}$ sample;

wherein the sine and cosine terms of the function are reformulated to provide the log domain expressions:

$$ \sin\left(\arctan\left(\frac{b_{1,i}}{a_{1,i}}\right) - \arctan\left(\frac{b_{2,i}}{a_{2,i}}\right)\right) = \frac{b_{1,i}a_{2,i}}{A_{1,i}A_{2,i}} - \frac{a_{1,i}b_{2,i}}{A_{1,i}A_{2,i}} $$

and

$$ \cos\left(\arctan\left(\frac{b_{1,i}}{a_{1,i}}\right) - \arctan\left(\frac{b_{2,i}}{a_{2,i}}\right)\right) = \frac{b_{1,i}b_{2,i}}{A_{1,i}A_{2,i}} - \frac{a_{1,i}a_{2,i}}{A_{1,i}A_{2,i}}, $$

where $A_{1,i}$ is the amplitude of a first of said two intra-band signals and $A_{2,i}$ is the amplitude of a second of said two intra-band signals;

the method comprising:

performing amplitude extraction of the oscillator signal according to the method of either of claims 9 or 10 to provide an amplitude signal having a value substantially equal to the binary logarithm of the amplitude of the oscillatory signal;

providing sequential circuitry, the sequential circuitry comprising:

a first delay element configured to receive the signal of the binary logarithm of the amplitude of the oscillatory signal and to provide a delayed version of said amplitude signal;

a second delay element configured to receive the binary logarithm of the absolute value of the real component of the oscillatory signal and to provide a delayed version of the absolute value of the real component of the oscillatory signal;

a third delay element configured to receive the binary logarithm of the absolute value of the imaginary component of the oscillatory signal and to provide a delayed version of the binary logarithm of the absolute value of the imaginary component of the oscillatory signal; and

a fourth delay element configured to receive the signum code of the real component of the oscillatory signal and to provide a delayed version of the signum code of the real component of the oscillatory signal; and a fifth delay element to receive the signum code of the imaginary component of the oscillatory signal and to provide a delayed version of the signum code of the imaginary component of the oscillatory signal;

providing a first adder circuit, or adder/subtractor circuit, to add the signal of the binary logarithm of the amplitude of the oscillatory signal to the delayed version of said amplitude signal to provide a signal whose value is the sum of said amplitude signals;

providing a first cell according to either of claims 2 or 3, programmed according to the method of claim 6 such that its cell function is to provide a sum of its first and second data input port values minus its third data input port value, said first data input port receiving the binary logarithm of the absolute value of the imaginary component of the oscillatory signal, said second data input port receiving the binary logarithm of the delayed version of the absolute value of the real component of the oscillatory signal, the third data input port receiving the sum of said amplitude signals, the remaining data input ports having fixed values of 0, the first cell having access to the signum code of the imaginary component of the oscillatory signal for use as a control port input pair relative to the first cell's first data input port, and to the signum code of the delayed version of the real component of the oscillatory signal for use as a control port input pair relative to the first cell's second data input port;;

providing a second cell according to either of claims 2 or 3, programmed according to the method of claim 6 such that its cell function is to provide a sum of its first and second data input port values minus its third data input port value, said first data input port the binary logarithm of the absolute value of the imaginary component of the oscillatory signal, said second data input port receiving the binary logarithm of the delayed version of the absolute value of the real component of the oscillatory signal, the third data input port receiving the sum of said amplitude signals, the remaining data input ports having fixed values of 0; the second cell having access to the signum code of the imaginary component of the oscillatory signal for use as a control port input pair relative to the second cell's first data input port, and to the signum code of the delayed version of the real component of the oscillatory signal for use as a control port input pair relative to the first cell's second data input port;;

providing a second adder/subtractor circuit configured to subtract the output from the second cell from the output from the first cell to provide a first phase difference signal;

providing a third cell according to either of claims 2 or 3, programmed according to the method of claim 6 such that its cell function is to provide a sum of its first and second data input port values minus its third data input port value, said first data input port receiving the binary logarithm of the absolute value of the imaginary component of the oscillatory signal, said second data input port receiving the binary logarithm of the delayed version of the absolute value of the imaginary component of the oscillatory signal, the third data input port receiving the sum of said amplitude signals, the remaining data input ports having fixed values of 0, the third cell having access to the signum code of the imaginary component of the oscillatory signal for use as a control port input pair relative to the third cell's first data input port, and to the signum code of the delayed version of the imaginary component of the oscillatory signal for use as a control port input pair relative to the third cell's second data input port; the third cell thus producing a second phase signal;

providing a fourth cell according to either of claims 2 or 3, programmed according to claim 6 such that its cell function is to provide a sum of its first and second data input port values minus its third data input port value, said first data input port receiving the binary logarithm of the absolute value of the real component of the oscillatory signal, said second data input port receiving the binary logarithm of the delayed version of the absolute value of the real component of the oscillatory signal, the third data input port receiving the sum of said amplitude signals, the remaining data input ports having fixed values of 0, the fourth cell having access to the signum code of the real component of the oscillatory signal for use as a control port input pair relative to the fourth cell's first data input port, and to the signum code of the delayed version of the real component of the oscillatory signal for use as a control port input pair relative to the fourth cell's second data input port; the fourth cell thus producing a second phase signal;

providing a third adder/subtractor circuit configured to subtract the output from the fourth cell from the output from the third cell to provide a second phase difference signal;

providing a first accumulator, configured to accumulate a plurality of first phase difference signal values over a predetermined sample window;

providing a second accumulator, configured to accumulate a plurality of second phase difference signal values over the predetermined sample window; and

providing a selector configured to select the maximum value between the accumulated first phase difference signal values and the accumulated second phase difference signal values, thereby providing the phase locking value.

**15.** Use of the cell according to either of claims 2 or 3 to perform a function involving multiplication between a plurality of factors wherein at least one of said factors is the result of an exponentiation of an operand by a power value, the power value being expressible as a number having a numerator and a denominator, wherein:

said factors which are not the result of an exponentiation are provided at respective data input ports of the cell; and said factors which are the result of an exponentiation are subjected to a conditioning function whose result is provided at a respective data input of the cell, the conditioning function comprising:

if the numerator has a value of $2^x$, where x is either 0 or a positive integer:
performing an x-position left shift on a binary logarithmic conversion of said operand; or
if the numerator has a value which is greater than $2^x$, where x is either 0 or a positive integer:

performing an x-position left shift on a binary logarithmic conversion of said operand; and
adding the binary log conversion of said operand to the output of the shift register a number of times equal to numerator_value-$2^x$; or

if the numerator has a value which is less than $2^x$, where x is either 0 or a positive integer:

performing an x-position left shift on a binary logarithmic conversion of said operand at the first data input port of the cell; and
subtracting the binary log conversion of said operand from the output of the shift register a number of times equal to $2^x$-numerator_value; or

if the denominator has a value of $2^x$, where x is either 0 or a positive integer:
performing an x-position arithmetic right shift on a binary logarithmic conversion of said operand at the first data input port of the cell; or
if the denominator has a value which is greater than $2^x$, where x is either 0 or a positive integer:

performing an x-position arithmetic right shift on a binary logarithmic conversion of said operand at the first data input port of the cell using the shift register; and
subtracting the binary log conversion of said operand from the output of the shift register a number of times equal to numerator_value-$2^x$; or

if the numerator has a value which is less than $2^x$, where x is either 0 or a positive integer:

performing an x-position left shift on a binary logarithmic conversion of said operand at the first data input port of the cell using the shift register; and
adding the binary log conversion of said operand to the output of the shift register a number of times equal to $2^x$-numerator_value;

deriving signum values for said operand and for any of the factors and encoding the signum values to provide signum codes of 00, 01 or 11 depending on whether the signum value of the corresponding operand or factor has a value of 0, +1 or -1;
providing said signum codes as respective control line pairs of the control input port of the cell and providing values of 01 as control line pairs from the control input port corresponding to any remaining data input ports which are unused.

Figure 1

Figure 2

390

300

sgn

enc

/2

/2

/2

enc(sgn(opc))[1]    enc(sgn(opc))[0]

enc(sgn(opb))[1]    enc(sgn(opb))[0]

enc(sgn(opa))[1]    enc(sgn(opa))[0]

342

352

0

305

$\log_2(opa)$

/n

opa

opb

306

$\log_2(opb)$

/n

+

310

+

opc

307

$\log_2(opc)$

/n

-

311

+

320

330

1

340

0

0

1

350

0

out

/n

Figure 3

400

SC    410

420

SC

420

430

SC

420

430

SC    410

420

SC

420

430

SC

420

430

SC

+

432

1

436

0

+

+

434

430

Figure 4

Figure 5

Figure 6

Figure 7

Figure 8

Europäisches
Patentamt
European
Patent Office
Office européen
des brevets

## EUROPEAN SEARCH REPORT

Application Number

EP 25 15 4663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PTER LEE ED - WILL MOORE ET AL: "An FPGA prototype for a multiplierless FIR filter built using the logarithmic number system", 29 August 1995 (1995-08-29), 5TH INTERNATIONAL WORKSHOP, PROCEEDINGS OF 5TH INTERNATIONAL WORKSHOP ON FIELD PROGRAMMABLE LOGIC AND APPLICATIONS - 29 AUG.-1 SEPT. 1995 - OXFORD, UK, SPRINGER, BERLIN, PAGE(S) 303 - 310, XP019196438, ISBN: 978-3-540-60294-1 * Section 3; figure 2 * | 1-15 | INV. G06F7/483 |
| A | J.N. COLEMAN ET AL: "Arithmetic on the European logarithmic microprocessor", IEEE TRANSACTIONS ON COMPUTERS, vol. 49, no. 7, 1 July 2000 (2000-07-01), pages 702-715, XP055714609, USA ISSN: 0018-9340, DOI: 10.1109/12.863040 * Section 3; figure 6 * | 1-15 | |
| A | US 11 172 857 B2 (GOVERNING COUNCIL UNIV TORONTO [CA]) 16 November 2021 (2021-11-16) * column 7, line 60 - column 8, line 48; figures 4, 5 * | 1-15 | |

TECHNICAL FIELDS SEARCHED (IPC)

G06F

The present search report has been drawn up for all claims

| Place of search | Date of completion of the search | Examiner |
|---|---|---|
| Munich | 13 May 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 787 146 A1

## ANNEX TO THE EUROPEAN SEARCH REPORT
## ON EUROPEAN PATENT APPLICATION NO.

EP 25 15 4663

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | Publication date | Patent family member(s) | Publication date |
|---|---|---|---|
| US 11172857        B2 | 16-11-2021 | NONE | |

EPO FORM P0459

For more details about this annex : see Official Journal of the European Patent Office, No. 12/82

32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2024115863 A1

**Non-patent literature cited in the description**

- **ALAM**. Design of Finite Word Length Linear-Phase FIR Filters in the Logarithmic Number System Domain. *VLSI Design*, vol. 2014
- **GOGINENI**. *IEEE Transactions on Circuits and Systems I: Regular Papers*, vol. 70 (2), 833-845
- **LIU, H.** Electronics. 2022, 1913
- **DANEY ALEX**. *IEEE Transactions on Very Large-Scale Integration (VLSI) Systems*, July 2022, vol. 30 (7), 893-904